# FASCICULE DE BREVET EUROPEEN

(11) **EP 3 423 319 B1**
(45) Date de publication et mention de la délivrance du brevet: **27.11.2019**
(21) Numéro de dépôt: 17711717.3
(22) Date de dépôt: 01.03.2017
(51) Int. Cl.: B60T 17/08, B60T 13/26, B60T 17/16

(54) **SYSTÈME DE FREINAGE FERROVIAIRE POUR VÉHICULE FERROVIAIRE ET PROCÉDÉ DE FREINAGE D'UN VÉHICULE FERROVIAIRE COMPORTANT UN TEL SYSTÈME**
EISENBAHNBREMSSYSTEM FÜR SCHIENENFAHRZEUG UND VERFAHREN ZUM BREMSEN EINES SCHIENENFAHRZEUGS MIT SOLCH EINEM SYSTEM
RAIL BRAKING SYSTEM FOR RAIL VEHICLE AND METHOD FOR BRAKING A RAIL VEHICLE COMPRISING SUCH A SYSTEM

(30) Priorité: 04.03.2016 FR 1651828
(43) Date de publication de la demande: 09.01.2019
(73) Titulaire: Faiveley Transport Amiens, 80000 Amiens (FR)
(72) Inventeur: GONCALVES, Claudino, 80620 Ribeaucourt (FR); SALES, Jérémie, 80000 Amiens (FR); CORRENDO, Roberto, 10022 Carmagnola (TO) (IT)
(74) Mandataire: Santarelli
(86) Numéro de dépôt international: PCT/FR2017/050462
(87) Numéro de publication internationale: WO 2017/149245

(56) Documents cités:
- EP-A1- 2 154 040
- EP-A1- 2 202 122
- WO-A1-2014/026936
- WO-A2-2012/038277

## Description

### DOMAINE DE L'INVENTION

L'invention concerne le domaine du freinage des véhicules ferroviaires.

Elle concerne plus particulièrement les systèmes de freinage ferroviaires pour véhicule ferroviaire pourvus d'un frein de service et d'un frein de parking configurés pour agir sur une timonerie de freinage.

Elle concerne également les procédés de freinage de véhicules ferroviaires comportant de tels systèmes de freinage.

### ARRIERE PLAN TECHNOLOGIQUE

Les véhicules ferroviaires sont généralement équipés de cylindres de frein de service comportant un piston mobile sous l'effet d'un fluide sous pression, le déplacement de ce piston entraînant une action de freinage telle que le serrage d'un disque de frein entre deux garnitures, ou la pression directe d'une semelle contre une roue du véhicule.

Ces cylindres de frein comportent également généralement un actionneur de parking ou de secours qui est activé en cas de perte de pression du fluide sous pression et/ou en cas de vidange volontaire ou de fuite du système pneumatique. Cet actionneur, appelé aussi frein de parking, permet d'assurer le freinage grâce à la force d'un ou plusieurs ressorts se substituant à la force du fluide. Une fois ce frein de parking activé, le frein reste serré en permanence.

On connaît de la demande de brevet européen EP 2 154 040 un système de freinage ferroviaire pourvu d'un actionneur de frein de parking accouplé à un cylindre de frein de service ferroviaire. Ce cylindre de frein comporte un corps et un piston mobile par rapport au corps pour agir sur la timonerie de freinage par l'intermédiaire d'une tige de poussée.

Le cylindre de frein comporte également une chambre de pression délimitée par le piston et par le corps et qui est raccordée par un conduit à une source d'agent de pression pneumatique pour mettre le piston dans une position de freinage de service.

Le frein de parking comporte quant à lui un corps distinct du corps du cylindre de frein. Le corps du frein de parking présente une ouverture en vis-à-vis du piston du cylindre de frein de service, laquelle ouverture reçoit à coulissement un manchon de poussée s'ajustant dans cette ouverture de manière étanche.

Le frein de parking comporte également un piston monté mobile dans un cylindre solidaire du corps et délimitant avec le corps une chambre de pression de frein de parking. Cette chambre de pression de frein de parking est raccordée à une autre source d'agent de pression pneumatique via un conduit. Le piston comporte en son centre un orifice traversé par le manchon de poussée.

Le frein de parking comporte en outre un ou des ressorts qui sollicitent en permanence le piston de ce frein de parking vers une position dite basse où le frein de parking est considéré comme étant dans une configuration de travail.

Pour actionner le frein de parking lorsque le piston du cylindre de frein de service est en position de freinage de service, la chambre de pression du frein de parking (préalablement remplie avec l'agent de pression pneumatique) est vidangée et le ou les ressorts du frein de parking agissent alors sur le piston du frein de parking, lequel entraîne le manchon jusqu'à ce que ce dernier vienne en appui contre le piston du cylindre de frein de service.

La chambre de pression du cylindre de frein de service peut alors être vidangée puisque le frein de parking est actionné.

La force appliquée par le frein de parking sur le piston de frein de service est directement fonction de la force développée par les ressorts. Cette force est fonction bien entendu de la raideur et de l'allongement de ces ressorts.

Avec ce système de freinage, l'effort appliqué par le piston du cylindre de frein de service lorsque le frein de parking est actionné et le cylindre de frein de service est vidangé sur la timonerie de freinage est souvent inférieur à l'effort appliqué par ce même piston lorsqu'il est en position de freinage de service.

### OBJET DE L'INVENTION

L'invention concerne un système de freinage pour véhicule ferroviaire, présentant des performances améliorées par rapport aux systèmes de freinage de l'art antérieur susmentionnés, tout en étant simple, commode et économique.

L'invention a ainsi pour objet, sous un premier aspect, un système de freinage ferroviaire pour véhicule ferroviaire à freins à au moins une garniture ou à au moins une semelle, comportant un corps, une timonerie de freinage configurée pour agir sur au moins un dit frein, un frein de service comportant un piston de freinage mobile par rapport audit corps pour agir sur ladite timonerie de freinage et délimitant avec ledit corps une chambre de pression de frein de service configurée pour être alimentée par une première source d'agent de pression pneumatique pour mettre ledit piston de freinage dans une position de freinage de service, ainsi qu'un frein de parking configuré pour agir sur ledit piston de freinage dudit frein de service et admettant une configuration de travail et une configuration de repos ;
ledit frein de parking comportant un dispositif de blocage mobile par rapport audit corps pour agir sur ledit piston de freinage et admettant une première position et une seconde position dans laquelle ledit dispositif de blocage est configuré pour immobiliser ledit piston de freinage en position de freinage de service, ledit frein de parking étant alors en configuration de travail, et un dispositif de commande mobile par rapport audit corps et admettant une position de verrouillage dans laquelle ledit dispositif de commande est configuré pour maintenir ledit dispositif de blocage dans sa seconde position ;
ledit système de freinage ferroviaire étant configuré pour alimenter la chambre de pression de frein de service avec un autre agent de pression pneumatique dont la valeur de pression est déterminée, de sorte à appliquer un effort de freinage déterminé lorsque ledit frein de parking est en configuration de travail ; et
ledit système de freinage ferroviaire comportant en outre un dispositif de détection et de mémorisation configuré pour recevoir une première information représentative de la position du dispositif de blocage, recevoir une deuxième information représentative de l'alimentation de la chambre de pression de frein de service par l'autre agent de pression pneumatique, déduire desdites première et deuxième informations représentatives une information représentative de l'application du frein de parking, et mémoriser ladite information représentative déduite ; grâce à quoi ladite information représentative de l'application du frein de parking est conservée même si la chambre de pression de frein de service n'est plus alimentée par l'autre agent de pression pneumatique.

Dans le système de freinage selon l'invention, le piston de freinage est immobilisé en position de freinage de service par le frein de parking et en particulier par son dispositif de blocage. Cela signifie que le piston de freinage peut être immobilisé dans n'importe quelle position, laquelle position est liée à la course que ce piston a parcourue et cette course dépend de l'effort appliqué lors de la phase de freinage de service.

On entend par le terme immobiliser le fait que l'effort appliqué par le piston de freinage sur la timonerie de freinage dans la configuration de travail du frein de parking ne diminue pas, ou presque pas.

On admet tout de même une certaine perte liée au recul du piston de freinage, en particulier au léger déplacement du piston par rapport au dispositif de blocage, au moment où la chambre de pression de frein de service est vidangée. Cette perte est maîtrisée et se définit par une très légère diminution de l'effort appliqué qui est due notamment aux tolérances de fabrication à la fois du dispositif de blocage et du piston de freinage. Cette diminution de l'effort appliqué sur la timonerie de freinage est ici appelée pertes au recul. Une valeur acceptable de ces pertes au recul est au maximum de l'ordre de 10% à 15% de l'effort appliqué par le frein de service à l'instant où le frein de parking est actionné pour être en configuration de travail.

La configuration du piston de freinage et du frein de parking permet de s'affranchir notamment du ou des ressorts des systèmes de freinage connus décrits ci-dessus qui permettent d'appliquer l'effort de frein de parking sur la timonerie de freinage par l'intermédiaire du piston du cylindre de frein de service. Ainsi, pour un même effort appliqué sur la timonerie de freinage lorsque le frein de parking est en configuration de travail, le système de freinage selon l'invention est plus compact que les systèmes de freinage de l'art antérieur susmentionnés, et également plus léger.

On notera que la timonerie de freinage présente avantageusement des bras déformables dont l'élasticité peut se substituer à celle des ressorts des systèmes de freinage connus décrits ci-dessus.

On notera que la configuration du frein de parking est choisie de telle sorte que la force appliquée directement par le dispositif de blocage pour immobiliser le piston de freinage n'est généralement pas supérieure à la force appliquée par les ressorts sur le piston des systèmes de freinage de l'art antérieur susmentionnés ; alors que l'effort appliqué sur la timonerie de freinage lorsque le frein de parking du système selon l'invention est en configuration de travail est de préférence au moins égal voire supérieur à celui procuré par les systèmes de freinage de l'art antérieur susmentionnés.

Le système de freinage selon l'invention peut en outre permettre d'alimenter momentanément la chambre de pression de frein de service avec l'autre agent de pression pneumatique afin d'augmenter l'effort de freinage appliqué sur la timonerie de freinage par le piston de frein de service. L'effort de freinage appliqué sur la timonerie de freinage lorsque le frein de parking est dans sa configuration de travail en est donc d'autant augmenté.

Le système selon l'invention peut ainsi permettre d'obtenir des efforts de freinage en particulier de frein de parking supérieurs à ceux obtenus avec les systèmes de freinage de l'art antérieur susmentionnés, de manière simple, commode et économique, tout en étant particulièrement sécuritaire.

Au surplus, la détection de la position du doigt de blocage permet de donner une information relative à l'état immobilisé ou non du piston de freinage de service ; tandis que la détection d'une valeur de pression dans la chambre de pression de frein de service issue de l'autre agent de pression (appelé ci-après troisième agent de pression pneumatique), qui diffère du premier agent de pression, permet de savoir qu'il ne s'agit pas de l'application d'un freinage de service.

La corrélation entre les informations représentatives détectées permet de manière simple et commode de déduire l'état du frein de parking et en particulier de s'assurer que le frein de parking est appliqué à un instant t.

La mémorisation de l'information représentative déduite permet au surplus de s'assurer, à un instant t+1 que le frein de parking a bien été appliqué à l'instant t.

Cette fonction de mémorisation est particulièrement commode par exemple lorsqu'un utilisateur (conducteur) du véhicule ferroviaire reprend ce dernier plusieurs heures ou jours après son immobilisation. Les fuites naturelles du système ne permettent pas d'assurer que la chambre de pression de frein de service soit toujours alimentée par l'autre agent de pression et cette chambre peut même être vidangée (sans action volontaire). Dès lors, l'information représentative de l'alimentation de cette chambre peut avoir disparue. La mémorisation de l'information déduite quant au fait que le frein de parking a bien été appliqué permet de fournir une indication fiable à l'utilisateur.

On notera par ailleurs que le premier agent de pression pneumatique permet généralement d'alimenter, lorsque le frein de parking n'est pas en configuration de travail, la chambre de pression de frein de service pour appliquer un effort de freinage de service, conformément à une consigne de frein de service. Ce même premier agent de pression pneumatique peut également permettre d'alimenter, lorsque le frein de parking n'est pas en configuration de travail, la chambre de pression de frein de service pour appliquer un effort de freinage d'urgence plutôt que de service, conformément à une consigne de frein d'urgence. Il peut être considéré ici que l'effort de frein d'urgence est un effort de frein de service modifié par un paramètre d'urgence.

Selon des caractéristiques préférées, simples, commodes et économiques du système selon l'invention :
- ledit dispositif de commande délimite avec ledit corps une chambre de pression de frein de parking configurée pour être alimentée par un deuxième agent de pression pneumatique, et admettant une position de verrouillage dans laquelle ledit dispositif de commande est configuré pour maintenir ledit dispositif de blocage dans sa seconde position ; et ladite première information représentative est une valeur de pression dudit deuxième agent de pression pneumatique prise dans une conduite de frein de parking alimentant ladite chambre de pression de frein de parking ;
- ledit système de freinage ferroviaire comporte un premier dispositif de distribution pneumatique dédié connecté à une source d'alimentation en agents de pression pneumatique et connecté à ladite chambre de pression de frein de parking afin de l'alimenter avec ledit deuxième agent de pression pneumatique ou de la vidanger pour mettre ledit frein de parking respectivement dans ses configurations de repos et de travail, ainsi qu'un second dispositif de distribution pneumatique dédié connecté à ladite source d'alimentation en agents de pression pneumatique et connecté à ladite chambre de pression de frein de service afin de l'alimenter avec l'autre, dit troisième, agent de pression pneumatique dont la valeur de pression est déterminée, de sorte à appliquer un effort de freinage déterminé lorsque ledit frein de parking est en configuration de travail ; lesdits premier et deuxième dispositifs de distribution pneumatiques dédiés étant configurés pour être commandés par au moins un signal de commande ;
- ledit dispositif de détection et de mémorisation comporte un corps, un piston de détection monté mobile dans le corps et définissant avec ce dernier une première chambre de détection et une deuxième chambre de détection distincte de la première chambre de détection, un organe de rappel élastique disposé dans la deuxième chambre de détection et configuré pour solliciter le piston de détection, un organe dit mémoire monté mobile également dans le corps, définissant avec ce dernier une chambre de verrouillage en communication fluidique avec la deuxième chambre de détection, et étant configuré pour agir sur le piston de détection via un ressort de rappel, de sorte à maintenir ce piston de détection dans une position prédéterminée ;
- le corps comporte un premier orifice de détection débouchant dans la première chambre de détection et communiquant avec une première conduite de détection raccordée à une conduite alimentant la chambre de pression de frein de service ; la première chambre de détection étant configurée pour être alimentée, via la première conduite de détection, par l'autre, dit troisième, agent de pression pneumatique lorsqu'il alimente la chambre de pression de frein de service et pour être vidangée lorsqu'il n'alimente pas la chambre de pression de frein de service ;
- le corps comporte un deuxième orifice de détection débouchant dans la deuxième chambre de détection et communiquant avec une deuxième conduite de détection raccordée à une conduite alimentant la chambre de pression de frein de parking ; la deuxième chambre de détection étant configurée pour être alimentée, via la deuxième conduite de détection, par le deuxième agent de pression pneumatique lorsqu'il alimente la chambre de pression de frein de parking et pour être vidangée lorsqu'il n'alimente pas la chambre de pression de frein de parking ;
- ledit dispositif de détection et de mémorisation comporte en outre organe d'indication à plusieurs voyants lumineux et présentant un signal d'alimentation, un commutateur et un ressort de rappel coopérant avec le commutateur ; et ledit dispositif de détection et de mémorisation est configuré de sorte que le déplacement de l'organe mémoire dans le corps permet d'agir sur le commutateur à l'encontre du ressort de rappel pour l'alimentation d'un des voyants lumineux ;
- ledit dispositif de détection et de mémorisation est configuré de sorte que, lorsque la chambre de pression de frein de parking est vidangée, la deuxième chambre de détection et la chambre de verrouillage ne sont pas alimentées, le piston de détection est sollicité par l'organe de rappel élastique, l'organe mémoire est sollicité par le ressort de rappel, la première chambre de détection est quant à elle alimentée par l'autre, dit troisième, agent de pression pneumatique et sollicite le piston de détection à l'encontre de l'organe de rappel ; de sorte à mettre le piston de détection dans un premier état où l'organe mémoire vient le maintenir en position ;
- ledit dispositif de détection et de mémorisation est configuré de sorte que, lorsque la chambre de pression de frein de parking est alimentée, la deuxième chambre de détection et la chambre de verrouillage sont alimentées, le piston de détection est sollicité par l'organe de rappel élastique et aussi par le deuxième agent de pression pneumatique, l'organe mémoire est déplacé à l'encontre du ressort de rappel, la première chambre de détection n'est quant à elle pas alimentée par le troisième agent de pression pneumatique ; de sorte que le piston de détection se trouve ainsi dans un second état où l'organe mémoire n'agit pas sur ce dernier ;
- le piston de détection présente une rainure formée sur le pourtour du piston de détection, du côté de la deuxième chambre de détection, et l'organe mémoire est logé dans une cavité du corps et est pourvu d'une tête d'extrémité configurée pour venir en butée dans la rainure ménagée sur le piston de détection lorsque ce dernier se trouve dans un premier état où l'organe mémoire vient le maintenir en position ;
- le piston de détection présente en outre une nervure formée sur le pourtour du piston de détection, du côté de la deuxième chambre de détection, et le corps est pourvu d'un épaulement contre lequel ladite nervure est configurée pour venir en butée, lorsque le piston de détection se trouve dans un second état où l'organe mémoire n'agit pas sur ce dernier ;
- le piston de détection est amené dans son second état par un premier effort égal à la somme des forces exercées par le deuxième agent de pression et par l'organe de rappel ; soit respectivement environ la valeur de pression de frein de parking multipliée par la surface du piston de détection sur laquelle agit cette pression de frein de parking, additionnée de la force exercée par l'organe de rappel ;
- le piston de détection est amené dans son premier état par un deuxième effort égal ici à environ la valeur de pression de l'autre, dit troisième, agent de pression pneumatique, multipliée par la surface du piston de détection sur laquelle agit cet autre agent, au niveau d'une extrémité libre du piston de détection ;
- le deuxième effort est supérieur à la force exercée par l'organe de rappel de sorte que, dans le premier état du piston de détection, sa nervure est à distance de l'épaulement du corps et sa rainure se retrouve alignée et au droit de la tête d'extrémité de l'organe mémoire ;
- le piston de détection est soumis, du côté d'une extrémité libre, au deuxième effort et du côté opposé à son extrémité libre, au premier effort ; et le dispositif de détection et de mémorisation est ici configuré de sorte que le premier effort est supérieur au deuxième effort ;
- ledit dispositif de détection et de mémorisation comporte un premier contrôleur configuré pour recevoir ladite première information représentative et un deuxième contrôleur configuré pour recevoir ladite deuxième information représentative ;
- ledit dispositif de détection et de mémorisation comporte en outre deux organes de gestion conditionnelle pourvus chacun d'un commutateur, d'un organe de rappel coopérant avec le commutateur respectif et recevant chacun un signal d'alimentation, un premier des deux organes de gestion conditionnelle étant connecté par un premier tronçon de conduite à une conduite alimentant la chambre de pression de frein de parking, et est aussi connecté par un deuxième tronçon de conduite à la fois au premier contrôleur et au deuxième contrôleur, et un second des deux organes de gestion conditionnelle est connecté par un troisième tronçon de conduite à une conduite alimentant la chambre de pression de frein de service et est aussi connecté par un quatrième tronçon de conduite au deuxième contrôleur ;
- ledit actionneur est configuré pour recevoir une consigne d'application de frein de parking par une première ligne de commande dédiée ; tandis que l'actionneur est configuré pour recevoir une consigne d'application de frein de parking par une deuxième ligne de commande dédiée ; le premier contrôleur est configuré pour alimenter électriquement ou non un voyant lumineux grâce à une source d'alimentation électrique, et le deuxième contrôleur est interposé sur la première ligne de commande et configuré d'une part, pour faire circuler ou non la consigne d'application de frein de parking jusqu'à l'actionneur et d'autre part, pour alimenter électriquement ou non un voyant lumineux grâce à une source d'alimentation électrique ;
- le premier contrôleur comporte une première bobine électrique connectée au deuxième tronçon de conduite, un premier commutateur configuré pour être actionné vers une position de travail par la première bobine électrique lorsqu'elle est alimentée, et un ressort de rappel configuré pour rappeler le commutateur vers une position de repos lorsque la première bobine électrique n'est pas alimentée ; et le deuxième contrôleur comportant une deuxième bobine électrique connectée au quatrième tronçon de conduite, une troisième bobine électrique connectée au deuxième tronçon de conduite, ainsi qu'un deuxième commutateur et un troisième commutateur assujetti mécaniquement au deuxième commutateur par une interface ; les deuxième et troisième commutateurs étant configurés pour être actionnés ensemble vers une position de travail par la deuxième bobine électrique lorsqu'elle est alimentée et que la troisième bobine électrique n'est pas alimentée, et vers une position de repos par la troisième bobine électrique lorsqu'elle est alimentée et que la deuxième bobine électrique n'est pas alimentée ;
- le premier dispositif de distribution est commandé pour permettre de vidanger la chambre de pression de frein de parking, le commutateur du premier des deux organes de gestion conditionnelle n'établit pas de chemin électrique entre l'alimentation et le deuxième tronçon de conduite et n'alimente pas les première et troisième bobines électriques, le premier commutateur du premier contrôleur n'est pas sollicité par la première bobine et n'établit pas de chemin électrique entre l'alimentation et le voyant lumineux est éteint, le deuxième dispositif de distribution permet d'alimenter la chambre de pression de frein de service avec le troisième agent de pression pneumatique, le commutateur du second des deux organes de gestion conditionnelle établit un chemin électrique entre l'alimentation et le quatrième tronçon de conduite et alimente la deuxième bobine électrique, les deuxième et troisième commutateurs sont sollicités dans leur position de travail par la deuxième bobine, établissant ainsi un chemin électrique entre l'alimentation et le voyant lumineux qui est allumé ; de sorte à indiquer que le frein de parking est appliqué ; et/ou
- le premier dispositif de distribution est commandé pour permettre d'alimenter la chambre de pression de frein de parking, le commutateur du premier des deux organes de gestion conditionnelle établit un chemin électrique entre l'alimentation et le deuxième tronçon de conduite et alimente les première et troisième bobines électriques, le premier commutateur est sollicité par la première bobine et établit un chemin électrique entre l'alimentation et le voyant lumineux qui est allumé, le commutateur du second des deux organes de gestion conditionnelle n'établit pas de chemin électrique entre l'alimentation et le quatrième tronçon de conduite et donc n'alimente pas la deuxième bobine électrique, les deuxième et troisième commutateurs sont sollicités dans leur position de repos par la troisième bobine, coupant le chemin électrique entre l'alimentation et le voyant lumineux qui est éteint et autorisant le signal de frein de parking à cheminer jusqu'à l'actionneur du deuxième dispositif de distribution.

L'invention a aussi pour objet, sous un deuxième aspect, un procédé de freinage d'un véhicule ferroviaire, comportant un système de freinage ferroviaire tel que décrit ci-dessus, comportant :
- l'étape de recevoir une information représentative de la position du doigt de blocage ;
- l'étape de recevoir une information représentative de l'alimentation par un autre agent de pression pneumatique de la chambre de pression de frein de service ;
- l'étape de déduire desdites informations représentatives reçues, une information représentative de l'application du frein de parking ; et
- l'étape de mémoriser ladite information représentative déduite.

Le procédé selon l'invention est particulièrement simple et commode à mettre en œuvre, tout en étant également particulièrement sûr.

Selon des caractéristiques préférées, simples, commodes et économiques du procédé selon l'invention, il comporte au préalable, simultanément ou successivement quel que soit l'ordre, les étapes de commander le déplacement du doigt de blocage dans sa seconde position de sorte à mettre le frein de parking dans sa configuration de travail et de commander l'alimentation de la chambre de pression de frein de service avec l'autre agent de pression pneumatique de sorte à appliquer un effort de freinage déterminé.

### BREVE DESCRIPTION DES DESSINS

On va maintenant poursuivre l'exposé de l'invention par la description d'exemples de réalisation, donnée ci-après à titre illustratif et non limitatif, en référence aux dessins annexés sur lesquels :
- la figure 1 illustre schématiquement et partiellement un système de freinage ferroviaire conforme à un premier mode de réalisation de l'invention, lequel système est pourvu notamment d'un frein de service, d'un frein de parking et d'une unité de contrôle et de commande ;
- la figure 2 représente schématiquement de manière plus détaillée l'unité de contrôle et de commande illustrée sur la figure 1 et un réseau de cheminement de conduites du système qui est connecté à cette unité, laquelle unité est pourvue notamment de premier et second dispositifs de distribution pneumatiques connectés au frein de parking et d'un dispositif de détection et de mémorisation de l'application du frein de parking ;
- les figures 3 et 4 sont similaires à la figure 2, le dispositif de détection et de mémorisation de l'application du frein de parking étant montré schématiquement et conformément à un premier mode de réalisation, respectivement dans un premier état et dans un second état ;
- les figures 5 à 8 représentent plus en détail le dispositif de détection et de mémorisation illustré sur les figures 3 et 4, dans différentes configurations selon une première séquence de fonctionnement ;
- les figures 9 et 10 représentent des variantes de configurations remplaçant les configurations des figures 6 et 7, pour illustrer une seconde séquence de fonctionnement du dispositif de détection et de mémorisation illustré sur les figures 3 et 4 ;
- les figures 11 et 12 représentent une première variante de réalisation du dispositif de détection et de mémorisation illustré sur les figures 3 et 4 ;
- les figures 13 et 14 représentent une seconde variante de réalisation du dispositif de détection et de mémorisation illustré sur les figures 3 et 4 ; et
- les figures 15 et 16 sont des vues similaires à celles des figures 3 et 4, montrant un dispositif de détection et de mémorisation de l'application du frein de parking conforme à un second mode de réalisation.

### DESCRIPTION DETAILLEE D'UN EXEMPLE DE REALISATION

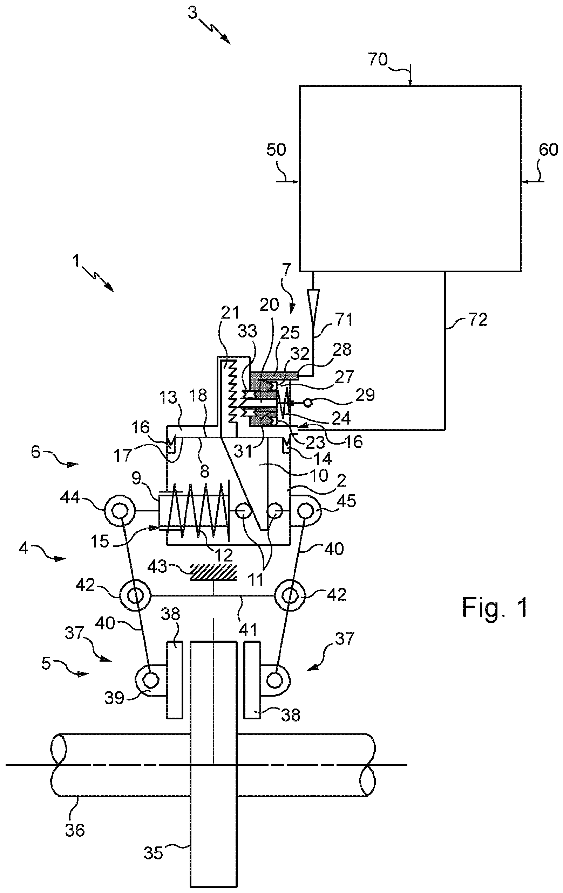

La figure 1 représente schématiquement un système de freinage ferroviaire 1 pour un véhicule ferroviaire à frein à garnitures ou à semelles.

Le système de freinage ferroviaire 1 comporte un corps 2 formant ici un cylindre à la fois de frein de service 6 et de frein de parking 7, une unité de contrôle et de commande 3 configurée pour gérer le fonctionnement du frein de service 6 et du frein de parking 7, un réseau de cheminement de conduites pneumatiques connecté au corps 2 et à l'unité de contrôle et de commande 3, une timonerie de freinage 4 reliée mécaniquement au corps 2 ainsi qu'un frein 5 à garnitures sur lequel la timonerie de freinage 4 est configurée pour agir.

Le corps 2 présente ici la forme d'une enveloppe globalement fermée.

Le frein de service 6 comporte un piston de frein de service 8 mobile par rapport au corps 2 selon une première direction axiale, une tige de poussée 9 mobile également par rapport au corps 2 suivant une deuxième direction axiale perpendiculaire à la première direction axiale.

Le piston de freinage 8 délimite avec le corps 2 une chambre de pression de frein de service 13.

Le piston de freinage 8 présente deux côtés respectivement un premier côté 17 configuré pour agir sur la timonerie de freinage 4 par l'intermédiaire de la tige de poussée 9 et un second côté 18 opposé au premier côté 17 et tourné vers la chambre de pression de frein de service 13.

Le frein de service 6 comporte en outre une tige crantée 21 fixée sur le deuxième côté 18 du piston de freinage 8. Cette tige crantée 21 s'étend longitudinalement selon la première direction axiale.

Le piston de freinage 8 est configuré pour se déplacer dans le corps 2 tout en maintenant la chambre de pression de frein de service 13 relativement étanche grâce à une membrane 14, par exemple formée par un joint d'étanchéité, disposée entre ce piston de freinage 8 et des bords intérieurs du corps 2.

Le frein de service 6 comporte en outre une pièce de coin 10 fixée sur le premier côté 17 du piston de freinage 8.

Cette pièce de coin 10 présente une section triangulaire et est configurée pour coopérer avec un jeu de butées à roulements 11, dont l'une des butées à roulements est reliée au corps 2 tandis que l'autre des butées à roulements est reliée à la tige de poussée 9.

Cette tige de poussé 9 est pourvue d'un régleur d'usure configuré pour compenser l'usure des garnitures du frein 5 afin d'éviter qu'un jeu trop important (consécutif à l'usure des garnitures) ne réduise l'effort de freinage.

Le frein de service 6 comporte en outre un ressort 12 ici disposé autour de la tige de poussée 9, entre la butée à roulements qui est reliée à cette dernière et un bord intérieur du corps 2. Ce ressort 12 est configuré pour rappeler la butée qui est reliée à la tige de poussée 9 contre la pièce de coin 10.

Le frein de service 6 comporte en outre un premier orifice 15 ménagé dans le corps 2 et configuré pour autoriser le déplacement de la tige de poussée 9 au travers de ce premier orifice 15.

Le frein de service 6 comporte en outre un deuxième orifice 16 ménagé dans le corps 2 et débouchant dans la chambre de pression de frein de service 13.

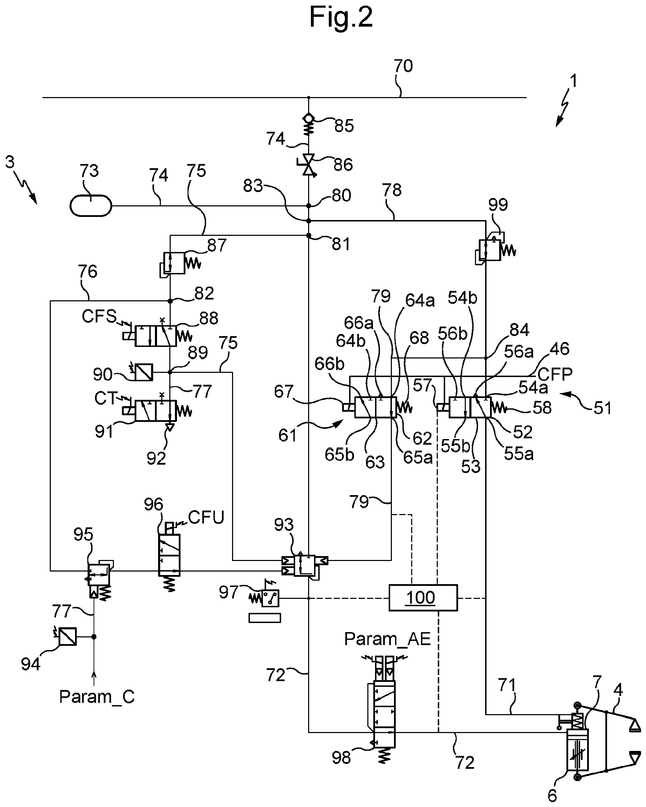

La chambre de pression de frein de service 13 est ici raccordée par une première conduite d'alimentation 72 du réseau de cheminement de conduites pneumatiques, appelée plus généralement conduite de frein, connectée au niveau de ce deuxième orifice 16, à une source d'alimentation en agents de pression pneumatiques 73 (visible figure 2).

Le corps 2 comporte une cavité 27 accolée à la chambre de pression de frein de service 13 et dans laquelle est disposé le frein de parking 7.

Le frein de parking 7 comporte un dispositif de blocage formé ici par un doigt de blocage 20 mobile par rapport au corps 2 et s'étendant suivant la deuxième direction axiale.

Le frein de parking 7 comporte en outre ici un piston de maintien 23 mobile par rapport au corps 2 et délimite avec ce dernier une chambre de pression de frein de parking 25.

Ce piston de maintien 23 présente deux côtés, respectivement un premier côté 31 sur lequel est attaché le doigt de blocage 20 et qui est tourné vers la chambre de pression de frein de parking 25, ainsi qu'un second côté 32 opposé au premier côté.

Le frein de parking 7 comporte en outre ici un élément ressort 24 disposé entre le corps 2 et le deuxième côté 32 du piston de maintien 23. Cet élément ressort 24 est configuré pour agir sur ce piston de maintien 23 et par conséquent sur le doigt de blocage 20.

On notera que le piston de maintien 23 et que l'élément ressort 24 forment ici un dispositif de commande mobile du frein de parking 7.

Le piston de maintien 23 est configuré pour se déplacer dans le corps 2 tout en maintenant la chambre de pression de frein de parking 25 relativement étanche grâce à une membrane (non référencée) disposée entre ce piston de maintien 23 et des bords intérieurs du corps 2.

Le frein de parking 7 comporte un troisième orifice (non représenté) ménagé dans le corps 2 et débouchant à la fois dans la chambre de pression de frein de parking 25 et dans la chambre de pression de frein de service 13, lequel troisième orifice est configuré pour autoriser le déplacement du doigt de blocage 20 à travers ce troisième orifice.

On notera que l'étanchéité relative entre la chambre de pression de frein de parking 25 et la chambre de pression de frein de service 13 est assurée par la présence d'un joint d'étanchéité 33 disposé à l'interface entre ce troisième orifice et le doigt de blocage 20.

Le frein de parking 7 comporte en outre un quatrième orifice 28 ménagé dans le corps 2 et débouchant dans la chambre de pression de frein de parking 25.

Cette chambre de pression de frein de parking 25 est ici raccordée par une deuxième conduite d'alimentation 71 du réseau de cheminement de conduites pneumatiques, appelée aussi conduite de frein de parking, connectée au niveau de ce quatrième orifice 28, à la source d'alimentation en agents de pression pneumatiques 73 (visible figure 2) via l'unité 3.

Le frein de parking 7 comporte en outre une pièce de déverrouillage 29 rattachée sur le deuxième côté 32 du piston de maintien 23 et débouchant à l'extérieur du corps 2 au travers d'un cinquième orifice (non représenté) ménagé dans ce corps 2 et débouchant dans la cavité 27 ; de sorte que cette pièce de déverrouillage 29 est accessible pour être manipulée depuis l'extérieur du corps 2 le cas échéant.

On notera que cette pièce de déverrouillage 29 peut comporter un indicateur visuel, par exemple un soufflet de couleur, de sorte à indiquer visuellement l'état de cette pièce 29.

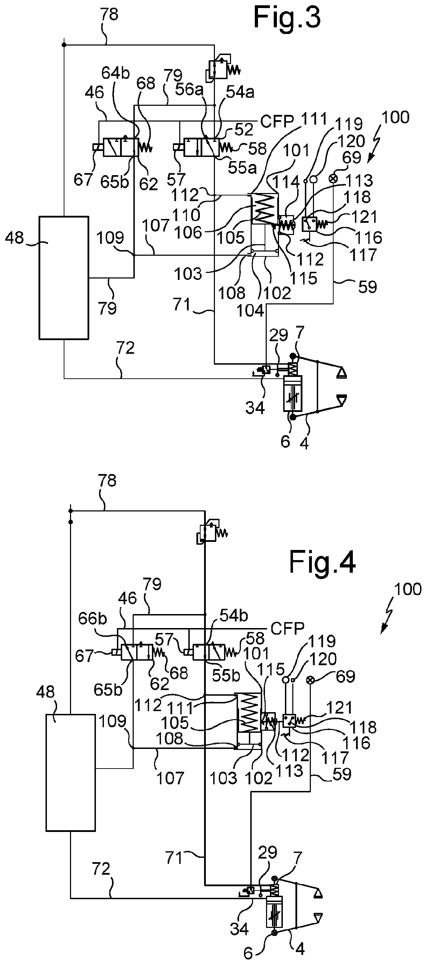

En variante, la pièce de déverrouillage 29 peut être couplée à un système d'indication visuel pourvu d'un commutateur assujetti mécaniquement à cette pièce 29 et présentant une première position et une deuxième position (voir ci-après en référence aux figures 3, 4 et 13 à 16).

Le frein de service 6 est disposé dans le corps 2 et est configuré pour agir sur le frein 5 par l'intermédiaire de la timonerie de freinage 4.

Ce frein 5 comporte un disque de frein 35 (ici vu de dessus) monté par exemple sur un essieu 36 de véhicule ferroviaire, ou directement sur la roue à freiner.

Ce frein 5 comporte en outre deux patins 37 pourvus chacun d'une garniture 38 configurée pour être appliquée au contact du disque 35 pour réduire sa vitesse de rotation et par conséquent celle de la roue à freiner, ainsi que d'un œillet de fixation 39 ménagé à l'opposé de la surface de la garniture 38 configurée pour venir s'appliquer sur le disque de frein 35.

La timonerie de freinage 4 comporte deux ou quatre leviers déformables 40 pourvus chacun d'une portion supérieure et d'une portion inférieure qui sont solidaires. Seulement deux leviers sont ici illustrés et, dans le cas où la timonerie présente quatre leviers, ils peuvent être solidaires deux à deux ou en variante indépendants les uns des autres.

Chaque portion des leviers 40 est articulée sur un connecteur central 41 par l'intermédiaire de deux pivots 42.

La portion inférieure de chaque levier déformable 40 est reliée à l'un des patins 37 par l'intermédiaire de son œillet de fixation 39.

La portion supérieure de chaque levier déformable 40 est quant à elle reliée à une articulation respective 44, 45.

La timonerie de freinage 4 reçoit le corps 2 entre les portions supérieures des leviers déformables 40, au niveau des articulations 44 et 45.

Le corps 2 est monté à rotation sur l'articulation 44 qui est solidaire d'une extrémité de la tige de poussée 9 tandis qu'il est monté fixe sur l'articulation 45, laquelle est directement solidaire de ce corps 2.

La timonerie de freinage 4 comporte également une patte de fixation 43 solidaire du connecteur central 41 pour le montage de cette timonerie de freinage 4 sur le véhicule ferroviaire ; afin que les patins de freinage 37 soient situés de part et d'autre du disque de frein 35 (ou de la roue du véhicule ferroviaire).

On notera que le rapprochement des articulations 44 et 45 permet d'écarter les patins 37 l'un de l'autre et qu'à l'inverse, l'éloignement de ces articulations 44 et 45 permet de serrer les patins 37 sur le disque de frein 35 (ou sur la roue du véhicule ferroviaire).

L'unité de contrôle et de commande 3 est connectée à la chambre de pression de frein de service 13 par l'intermédiaire de la première conduite d'alimentation 72 à laquelle elle est raccordée ; tandis que cette unité 3 est ici également connectée à la chambre de pression de frein de parking 25 par l'intermédiaire de la seconde conduite d'alimentation 71 à laquelle elle est raccordée. Au surplus, cette unité 3 est alimentée en agents pneumatiques par une conduite principale 70 qui chemine généralement le long du véhicule ferroviaire.

L'unité de contrôle et de commande 3 comporte des éléments systémiques (non représentés sur la figure 1) qui sont configurés pour recevoir et traiter des informations représentatives relatives à des consignes de fonctionnement du véhicule ferroviaire, par un premier canal du type électrique et/ou pneumatique et/ou encore manuel, noté 50 sur la figure 1.

Ces éléments systémiques sont en outre configurés pour recevoir et traiter des informations représentatives relatives à des paramètres d'utilisation du véhicule ferroviaire, par un second canal du type électrique et/ou pneumatique et/ou encore manuel, noté 60 sur la figure 1.

Ces éléments systémiques peuvent par exemple être formés par des relais pneumatiques et/ou des électrovannes et/ou des manostats et/ou des capteurs et/ou des détendeurs et/ou des relais électriques et/ou des cartes électroniques et/ou des unités centrales de traitement ou microprocesseurs, et/ou des composants de mémoire vive comportant des registres adaptés à enregistrer des variables des paramètres créés et modifiés au cours de l'exécution de programmes, et/ou des interfaces de communication configurées pour transmettre et recevoir des données, et/ou des éléments de stockage interne, tels que des disques durs, pouvant notamment comporter le code exécutable de programmes permettant la gestion des freins de service et parking 6 et 7.

On notera que sur la figure 1, l'unité de contrôle et de commande 3 est associée à une timonerie de freinage et à un seul frein 5 du véhicule ferroviaire. En variante, une telle unité de contrôle et de commande peut être associée à un essieu (non illustré) du véhicule ferroviaire, pourvu d'une pluralité de freins 5, ou à un bogie (non illustré) du véhicule ferroviaire, pourvu de deux essieux, ou encore à une voiture (non illustrée) du véhicule ferroviaire, pourvue de deux bogies, ou le véhicule ferroviaire peut ne comporter qu'une telle unité de contrôle et de commande.

La figure 2 représente schématiquement de manière plus détaillée le réseau de cheminement de conduites pneumatiques et l'unité de contrôle et de commande 3.

La conduite principale 70 forme le canal d'acheminement d'un agent pneumatique distribué dans le réseau de cheminement de conduites pneumatiques. L'agent dans cette conduite principale 70 est par exemple à une valeur de pression d'environ 9 bars.

Le réseau peut comporter une conduite dite générale (non représentée), distincte de la conduite principale 70, et s'étendant généralement en parallèle à cette dernière. La conduite générale permet également d'assurer la continuité pneumatique le long du véhicule ferroviaire et peut autoriser le freinage de service du véhicule, en utilisant directement le fluide cheminant dans la conduite générale. La conduite principale 70 permet quant à elle d'alimenter des équipements notamment du système de freinage ferroviaire, et en particulier la source d'alimentation en agents de pression pneumatiques 73 ici formée par un réservoir dit auxiliaire.

Ce réseau comporte en outre, comme décrit plus en détails ci-après, une conduite de remplissage et de distribution 74 piquée (c'est-à-dire directement raccordée) sur la conduite principale 70, une conduite de frein de service 75 raccordée par un piquage 81 sur la conduite de remplissage et de distribution 74, une conduite de frein d'urgence 76 piquée sur la conduite de frein de service 75 par un piquage 82, ainsi qu'une conduite de commande 78 raccordée par un piquage 83 également sur la conduite de remplissage et de distribution 74.

La conduite de commande 78 se subdivise en deux conduites au niveau d'un piquage de dérivation 84, respectivement en la conduite de frein de parking 71 communiquant directement avec la chambre de pression de frein de parking 25 et en une conduite de suralimentation, dite ci-après conduite preset 79.

Chacune des conduites de frein de service 75, de frein d'urgence 76 et preset 79, rejoignent la conduite de frein 72 qui communique directement avec la chambre de pression de frein de service 13.

La conduite de remplissage et de distribution 74 présente un premier tronçon de remplissage s'étendant entre le piquage (non représenté) sur la conduite principale 70 et le réservoir auxiliaire 73, ainsi qu'un second tronçon de distribution s'étendant depuis un piquage 80 sur le premier tronçon.

L'unité de contrôle et de commande 3 comporte ici une valve anti-retour 85 disposée sur le premier tronçon de la conduite de remplissage et de distribution 74 à proximité du piquage de cette dernière sur la conduite principale 70, ainsi qu'un robinet d'isolement 86 disposé également sur ce premier tronçon.

La valve anti-retour 85 permet le remplissage du réservoir auxiliaire 73 par l'agent de pression pneumatique issu de la conduite principale 70 et interdit la vidange du réservoir 73 dans la conduite principale 70 si la pression dans cette dernière devient inférieure à celle dans le réservoir auxiliaire 73.

L'unité de contrôle et de commande 3 comporte en outre ici un dispositif de relayage 93, ou relais pneumatique, alimenté par le second tronçon de distribution de la conduite de remplissage et de distribution 74 et raccordé à la conduite de frein 72.

Ce dispositif de relayage 93 est configuré pour générer, à partir de ce second tronçon de distribution et de valeurs pilotes de pression, une pression d'utilisation à un débit déterminé pour le remplissage de la chambre de pression de frein de service 13.

Ces valeurs pilotes de pression correspondent ici à des consignes de pression de frein de service, de frein d'urgence et preset, venant respectivement de la conduite de frein de service 75, de la conduite de frein d'urgence 76 et de la conduite preset 79.

L'unité de contrôle et de commande 3 comporte en outre ici, sur la conduite de frein de service 75 un détendeur 87 configuré pour limiter la valeur de pression par exemple ici à environ 4 bars ainsi qu'un dispositif de distribution 88 formé ici par une électrovanne monostable et configuré pour recevoir un signal de commande correspondant à une consigne de frein de service CFS.

Lorsque la valeur de consigne CFS est nulle, le dispositif de distribution 88 est configuré pour interrompre la conduite de frein de service 75 ; et lorsque la valeur de consigne CFS est non nulle, ce dispositif 88 est configuré pour autoriser le passage d'un agent de pression pneumatique, appelé premier agent de pression, jusqu'au dispositif de relayage 93 qui reçoit une valeur pilote de pression de frein de service et qui génère une pression de frein de service pour alimenter la chambre de pression de frein de service 13 pour le freinage du véhicule.

L'unité de contrôle et de commande 3 comporte en outre un capteur de pression 90 raccordé par un piquage 89 sur la conduite de frein de service 75 et qui permet de contrôler la valeur pilote de pression de frein de service.

L'unité de contrôle et de commande 3 comporte en outre une électrovanne de vidange 91 raccordée par le piquage 89 sur la conduite de frein de service 75 et qui permet de vidanger cette conduite via un orifice de vidange 92 sur cette électrovanne 91.

L'électrovanne 91 est monostable et configurée pour recevoir un signal de commande correspondant à une consigne de travail CT et pour fonctionner en inverse.

Lorsque la valeur de consigne CT est non nulle, l'électrovanne 91 est configurée pour interrompre la communication de la conduite de frein de service 75 avec l'orifice de vidange 92 ; et lorsque la valeur de consigne CT est nulle, cette électrovanne 91 est configurée pour autoriser la communication de cette conduite 75 avec cet orifice de vidange 92.

L'unité de contrôle et de commande 3 comporte en outre ici, sur la conduite de frein d'urgence 76, un dispositif de distribution 96 formé ici par une électrovanne monostable fonctionnant en inverse et configurée pour recevoir un signal de commande correspondant à une consigne de frein d'urgence CFU.

Lorsque la valeur de consigne CFU est non nulle, le dispositif de distribution 96 est configuré pour interrompre la conduite de frein d'urgence 76 ; et lorsque la valeur de consigne CFU est nulle, ce dispositif 96 est configuré pour autoriser le passage d'un agent de pression pneumatique jusqu'au dispositif de relayage 93 qui reçoit une valeur pilote de pression de frein d'urgence et qui génère une pression de frein d'urgence pour alimenter la chambre de pression de frein de service 13 pour le freinage d'urgence du véhicule.

L'unité de contrôle et de commande 3 comporte en outre un limiteur de pression 95 (ou détendeur) sur la conduite de frein d'urgence 76 en amont du dispositif de distribution 96, lequel limiteur 95 est contrôlé en fonction d'un paramètre de charge param_C du véhicule reçu via une conduite de charge 77 connectée au limiteur 95 ; et un capteur de pression 94 piqué sur la conduite de charge 77.

Le paramètre de charge param_C est une information représentative de la charge du véhicule et peut concerner par exemple un wagon seulement, ou bien plusieurs wagons successifs ou l'intégralité du véhicule ferroviaire. Cela dépend du nombre de systèmes de freinage conformes à l'invention et de la stratégie de commande de freinage.

On notera d'ailleurs que certains paramètres de fonctionnement de certains véhicules ferroviaires peuvent naturellement (ou initialement) être asservis à la charge du véhicule par exemple pour gérer le frein de service tandis que d'autres ne sont pas asservis à la charge du véhicule.

L'unité de contrôle et de commande 3 comporte sur la conduite de frein 72, un manostat 97 en aval du dispositif de relayage 93 et configuré pour vérifier s'il y a ou non un agent de pression pneumatique, à une valeur de pression au moins supérieure à une valeur seuil prédéterminée, dans la conduite de frein 72 et donc s'il y a une pression dans la chambre de pression de frein de service 13.

L'unité de contrôle et de commande 3 comporte en outre sur la conduite de frein 72 un dispositif anti-enrayage 98 formé ici par une électrovanne monostable et configuré pour recevoir des signaux de commande correspondants à des paramètres d'anti-enrayage Param_AE du véhicule ; de sorte à assurer l'efficacité du freinage du véhicule ferroviaire.

Ces paramètres d'anti-enrayage Param_AE sont des informations représentatives de l'anti-enrayage ou de l'enrayage du véhicule et peuvent par exemple correspondre à la charge du véhicule, à sa vitesse de roulage ainsi qu'aux valeurs pilotes de frein de service et/ou d'urgence.

L'unité de contrôle et de commande 3 comporte sur sa conduite de commande 78 un détendeur 99 configuré pour limiter la valeur de pression par exemple ici à environ 6 bars.

L'unité de contrôle et de commande 3 comporte un premier dispositif de distribution pneumatique 51 dédié sur sa conduite de frein de parking 71 et un second dispositif de distribution pneumatique 61 dédié sur sa conduite preset 79.

Le premier dispositif de distribution pneumatique 51 est formé par un premier distributeur 52 ici monostable, aussi appelé électrovanne, pourvu d'un tiroir mobile 53 à deux positions, d'un unique orifice d'entrée 54 (noté 54a ou 54b sur les figures) connecté à la conduite de commande 78, d'un unique orifice de sortie 55 (noté 55a ou 55b sur les figures) connecté à la conduite de frein de parking 71, et d'un orifice 56 (noté 56a ou 56b sur les figures) débouchant à l'atmosphère.

Le premier distributeur 52 est pourvu en outre d'un actionneur 57 configuré pour déplacer le tiroir 53 de sa première position à sa deuxième position en fonction d'un signal de commande reçu par cet actionneur 57, et d'un organe de rappel 58 configuré pour ramener le tiroir 53 respectif de sa deuxième position vers sa première position sans sollicitation de l'actionneur 57.

Le second dispositif de distribution pneumatique 61 est formé par un second distributeur 62 ici monostable, ou électrovanne, pourvu d'un tiroir mobile 63 à deux positions, d'un unique orifice d'entrée 64 (noté 64a ou 64b sur les figures) connecté à la conduite de commande 78 via la conduite preset 79, d'un unique orifice de sortie 65 (noté 65a ou 65b sur les figures) connecté à la conduite de frein 72 via la conduite preset 79 et le dispositif de relayage 93, et d'un orifice 66 (noté 66a ou 66b sur les figures) débouchant à l'atmosphère.

Le second distributeur 62 est pourvu en outre d'un actionneur 67 configuré pour déplacer le tiroir 63 de sa première position à sa deuxième position en fonction d'un signal de commande reçu par cet actionneur 67, et d'un organe de rappel 68 configuré pour ramener le tiroir 63 respectif de sa deuxième position vers sa première position sans sollicitation de l'actionneur 67.

L'unité de contrôle et de commande 3 comporte en outre un dispositif de commande dédié configuré pour commander les premier et second dispositifs de distribution pneumatique 51 et 61.

Ce dispositif de commande des premier et second dispositifs de distribution pneumatique comporte ici une ligne de commande 46 reliée directement aux actionneurs 57 et 67 des premier et second dispositifs de distribution pneumatique 51 et 61 et configurée pour faire circuler une consigne d'application du frein de parking CFP.

Lorsque la consigne d'application du frein de parking CFP est nulle, cela signifie que le frein de parking 7 doit ici être appliqué (figures 2 et 3). Il s'agit d'une application dite sécuritaire.

Le cas échéant, le premier distributeur 52 présente une première position par défaut dite de sécurité dans laquelle son unique orifice de sortie 55a connecté à la chambre de pression de frein de parking 25 via la conduite de frein de parking 71 communique avec son orifice débouchant à l'atmosphère 56a, tandis que son unique orifice d'entrée 54a connectée au réservoir auxiliaire 73 via la conduite de commande 78 et la conduite d'alimentation et de distribution 74 est bouché (figures 2 et 3).

La chambre de pression de frein de parking 25 est alors vidangée et le doigt de blocage 20 vient immobiliser la tige 21 du piston 8. Le frein de parking est appliqué.

Le second distributeur 62 présente quant à lui une première position par défaut dite aussi de sécurité dans laquelle son unique orifice de sortie 65a connecté à la chambre de pression de frein de service 13 via la conduite de frein 72 communique avec son unique orifice d'entrée 64a connectée au réservoir auxiliaire 73 via la conduite de commande 78 et la conduite d'alimentation et de distribution 74, tandis que son orifice 66a à l'atmosphère est bouché (figures 2 et 3).

Le second distributeur 62 autorise donc le passage d'un agent de pression pneumatique, dit troisième agent de pression, jusqu'au dispositif de relayage 93 qui reçoit une valeur pilote de pression preset et qui génère une pression preset pour alimenter la chambre de pression de frein de service 13.

Pour enlever l'application du frein de parking 7 (figure 4), une consigne non nulle d'application du frein de parking CFP chemine sur la ligne de commande 46 jusqu'aux actionneurs 57 et 67 qui déplacent les tiroirs 53 et 63 des premier et second distributeurs 52 et 62 à l'encontre des organes de rappel 58 et 68.

Le cas échéant, le premier distributeur 52 présente une seconde position dans laquelle son unique orifice de sortie 55b connecté à la chambre de pression de frein de parking 25 via la conduite de frein de parking 71 communique avec son unique orifice d'entrée 54b connectée au réservoir auxiliaire 73 via la conduite de commande 78 et la conduite d'alimentation et de distribution 74, tandis que son orifice débouchant à l'atmosphère 56b est bouché (figure 4).

Le premier distributeur 52 autorise donc le passage d'un agent de pression pneumatique, dit deuxième agent de pression, directement jusqu'à la chambre de pression de frein de parking 25 via la conduite de frein de parking 71. Le doigt de blocage 20 est alors reculé dans cette chambre et libère la tige 21 du piston 8.

Le second distributeur 62 présente quant à lui une seconde position dans laquelle son unique orifice de sortie 65b est connecté à son orifice 66b à l'atmosphère, tandis que son unique orifice d'entrée 64b connectée au réservoir auxiliaire 73 via la conduite de commande 78 et la conduite d'alimentation et de distribution 74 est bouché (figure 4).

Le second distributeur 62 interdit donc le passage du troisième agent de pression pneumatique jusqu'au dispositif de relayage 93 qui ne reçoit donc pas de valeur pilote de pression preset et qui vidange la pression preset le cas échéant.

L'unité de contrôle et de commande 3 comporte en outre un dispositif de détection et de mémorisation 100 dédié configuré pour détecter l'application du frein de parking 7 et pour mémoriser l'information selon laquelle le frein de parking est appliqué, même lorsque la conduite de frein 72 et/ou la conduite preset 79 n'achemine plus un agent de pression pneumatique du fait par exemple de fuites naturelles du système 1.

Ce dispositif de détection et de mémorisation 100 de l'application du frein de parking 7 est configuré pour recevoir une information représentative de l'alimentation de la chambre de pression de frein de service 13 par le troisième agent de pression pneumatique via le second distributeur 62, et recevoir une information représentative de la vidange de la chambre de pression de frein de parking 25 via le premier distributeur 52.

Ce dispositif de détection et de mémorisation 100 peut être configuré pour récupérer ces informations directement sur la conduite de frein de parking 71 et/ou sur la conduite preset 79, après le second distributeur 62, et/ou sur la conduite de frein 72, entre la chambre de pression de frein de service 13 et le dispositif anti-enrayage 98 ou entre ce dernier et le dispositif de relayage 93 (traits en pointillés sur la figure 2).

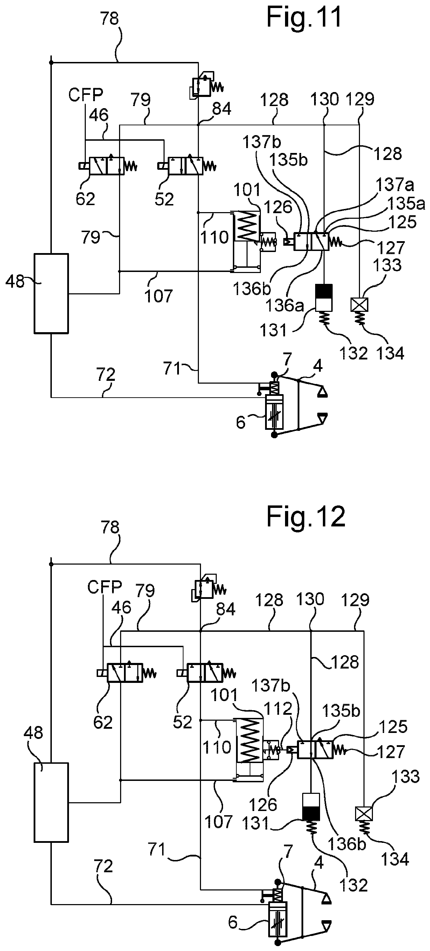

Les figures 3 et 4 représentent plus en détail le dispositif de détection et de mémorisation 100, selon un premier mode de réalisation. Pour simplifier les figures, les éléments de cheminement et de système décrits ci-avant en référence à la figure 2, en particulier au sujet du frein de service, du frein d'urgence, de la vidange, du relayage et de l'anti-enrayage, sont ici regroupés dans une sous unité référencée 48 (ce sera également le cas sur les figures 11 à 16).

Ce dispositif de détection et de mémorisation 100 comporte un corps 102, un piston de détection 103 monté mobile dans le corps 102 et définissant avec ce dernier une première chambre de détection 104 et une deuxième chambre de détection 106 distincte de la première chambre de détection 104 et un organe de rappel élastique 105 disposé dans la deuxième chambre de détection 106 et configuré pour solliciter le piston de détection 103.

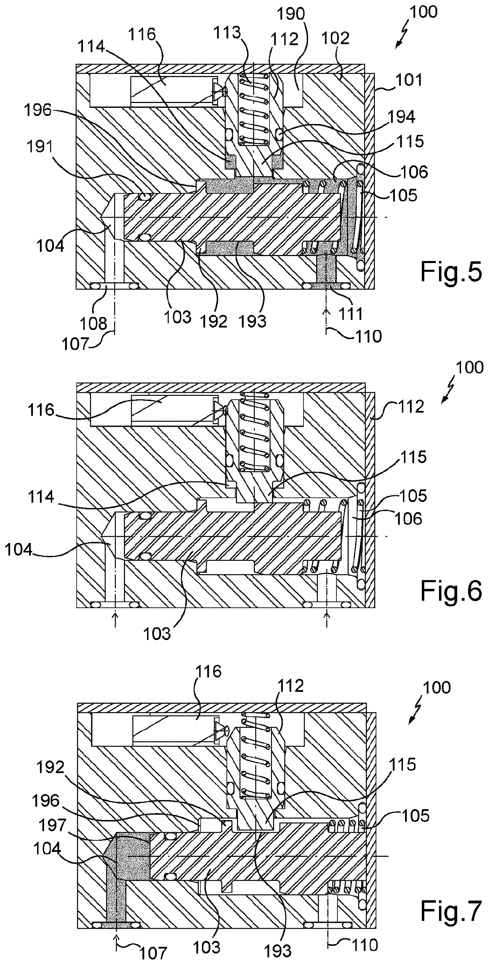

Le dispositif de détection et de mémorisation 100 comporte en outre un organe dit mémoire 112 monté mobile également dans le corps 102, définissant avec ce dernier une chambre de verrouillage 114 (visible figures 5 à 8) et étant configuré pour agir sur le piston de détection 103, via un ressort de rappel 113, de sorte à maintenir ce piston 103 dans une position prédéterminée.

La chambre de verrouillage 114 est en communication fluidique avec la deuxième chambre de détection 106.

Le corps 102 comporte un premier orifice de détection 108 débouchant dans la première chambre de détection 104 et communiquant avec une première conduite de détection 107 qui est raccordée par un piquage 109 à la conduite preset 79, ici entre le second distributeur 62 et le dispositif de relayage 93.

La première chambre de détection 104 est configurée pour être alimentée, via la première conduite de détection 107, par le troisième agent de pression pneumatique cheminant dans la conduite preset 79 lorsque le deuxième distributeur 62 autorise le passage de cet agent de pression (figure 3) ; tandis que cette chambre 104 est vidangée lorsque l'unique orifice de sortie 65b du deuxième distributeur 62 communique avec son orifice 66b débouchant à l'atmosphère (figure 4).

Le corps 102 comporte en outre un deuxième orifice de détection 111 débouchant dans la deuxième chambre de détection 106 et communiquant avec une deuxième conduite de détection 110 qui est raccordée par un piquage 112 à la conduite de frein de parking 71.

La deuxième chambre de détection 106 est configurée pour être alimentée, via la deuxième conduite de détection 110, par le deuxième agent de pression pneumatique cheminant dans la conduite de frein de parking 71 lorsque le premier distributeur 52 autorise le passage de cet agent de pression (figure 4) ; tandis que cette chambre 106 est vidangée lorsque l'unique orifice de sortie 55b du premier distributeur 52 communique avec son orifice 56b débouchant à l'atmosphère (figure 3).

Le dispositif de détection et de mémorisation 100 comporte en outre organe d'indication 116 présentant un signal d'alimentation 117, un commutateur 118 et un ressort de rappel 121 coopérant avec le commutateur 118. Cet organe d'indication 116 est connecté ici à deux voyants lumineux 119 et 120, qui sont distincts.

Le dispositif de détection et de mémorisation 100 est configuré de sorte que le déplacement de l'organe mémoire 112 dans le corps permet d'agir sur le commutateur 118 à l'encontre du ressort de rappel 121 pour l'alimentation du voyant lumineux 120, qui est donc allumé. Sans sollicitation du commutateur, c'est le voyant lumineux 119 qui est alimenté et donc allumé.

Sur la figure 3, la chambre de pression de frein de parking 25 est vidangée de sorte que le frein de parking 7 est appliqué. La deuxième chambre de détection 106 et la chambre de verrouillage 114 ne sont pas alimentées de sorte que le piston de détection 103 est sollicité par l'organe de rappel élastique 105 et l'organe mémoire 112 est sollicité par le ressort de rappel 113. La première chambre de détection 104 est quant à elle alimentée par le troisième agent de pression pneumatique et sollicite le piston de détection 103 à l'encontre de l'organe de rappel 105 ; de sorte à mettre le piston de détection 103 dans un premier état où l'organe mémoire 112 vient le maintenir en position. L'organe mémoire 112 se trouve alors dans une première position dans laquelle il n'agit pas sur le commutateur 118 et c'est donc le voyant lumineux 119 qui est alimenté et allumé ; pour indiquer que le frein de parking 7 est appliqué.

Le fait de bloquer le piston de détection 103 dans son premier état permet de mémoriser l'information selon laquelle le frein de parking est appliqué, même lorsque la conduite de frein 72 et/ou la conduite preset 79 n'achemine plus un agent de pression pneumatique du fait par exemple de fuites naturelles du système 1.

Sur la figure 4, la chambre de pression de frein de parking 25 est alimentée de sorte que le frein de parking 7 n'est pas appliqué. La deuxième chambre de détection 106 et la chambre de verrouillage 114 sont alimentées de sorte que le piston de détection 103 est sollicité par l'organe de rappel élastique 105 et aussi par le deuxième agent de pression pneumatique, et l'organe mémoire 112 est déplacé à l'encontre du ressort de rappel 113. La première chambre de détection 104 n'est quant à elle pas alimentée par le troisième agent de pression pneumatique. Le piston de détection 103 se trouve ainsi dans un second état où l'organe mémoire 112 n'agit pas sur ce dernier. L'organe mémoire 112 se trouve dans une deuxième position dans laquelle il agit sur le commutateur 118 et c'est donc le voyant lumineux 120 qui est alimenté et allumé ; pour indiquer que le frein de parking 7 n'est pas appliqué.

On notera que la pièce de déverrouillage 29 du frein de parking 7 est ici couplée à système d'indication visuel pourvu d'un commutateur 34 assujetti mécaniquement à cette pièce 29, d'une ligne d'alimentation électrique (non représentée) connectée au commutateur 34, d'un organe de rappel élastique (non représenté) sollicitant le commutateur 34 dans une première position, et d'une ligne de transfert 59 connectée au commutateur 34 et se prolongeant jusqu'à un indicateur visuel tel qu'un voyant lumineux 69.

Par exemple, lorsque la pièce de déverrouillage 29 n'est pas sollicitée, le commutateur 34 est sollicité par l'organe de rappel dans sa première position où aucun chemin électrique n'est établi entre la ligne d'alimentation électrique et la ligne de transfert 59, de sorte que le voyant lumineux 69 n'est pas alimenté et est donc éteint ; tandis que lorsque la pièce de déverrouillage 29 est sollicitée, le commutateur 34 est déplacé à l'encontre de l'organe de rappel de sa première position vers une deuxième position, où un chemin électrique est établi entre la ligne d'alimentation électrique et la ligne de transfert 59, de sorte que le voyant lumineux 69 est alimenté et est donc allumé pour indiquer que le piston de freinage 8 n'est pas bloqué en position. Bien entendu, le fonctionnement inverse est possible (le voyant serait allumé lorsque le piston de freinage serait bloqué).

Les figures 5 à 8 illustrent une première séquence permettant de détecter et de mémoriser que le frein de parking 7 a été appliqué.

Sur les figures 5 à 8, l'organe mémoire 112 et l'organe d'indication 116 sont logés dans une cavité 190 du corps 102.

L'organe mémoire 112 est pourvu d'un joint d'étanchéité 194 sur un pourtour pour délimiter avec le corps 102 la chambre de verrouillage 114 et d'une tête d'extrémité 115 configurée pour venir en butée sur le piston de détection 103.

Le piston de détection 103 présente un joint d'étanchéité 191 sur un pourtour pour délimiter, avec le corps, à la fois la première chambre de détection 104 et la deuxième chambre de détection 106.

Le piston de détection 103 présente en outre une rainure 193 ainsi qu'une nervure 192 ici adjacente à la rainure 193 et formées chacune sur le pourtour du piston de détection 103, du côté de la deuxième chambre de détection 106.

La rainure 193 est configurée pour recevoir, en butée, la tête d'extrémité 115 de l'organe mémoire 112 lorsque ce dernier se trouve dans sa première position et le piston de détection 103 se trouve dans son premier état.

La nervure 192 est quant à elle configurée pour venir en butée contre un épaulement 196 ménagé dans le corps 102, lorsque le piston de détection 103 se trouve dans son second état.

Sur la figure 5, la deuxième chambre de détection 106 et la chambre de verrouillage 114 sont alimentées de sorte que le piston de détection 103 est sollicité à la fois par l'organe de rappel élastique 105 et aussi par le deuxième agent de pression pneumatique; et l'organe mémoire 112 est déplacé à l'encontre du ressort de rappel 113.

Comme sur la figure 4, cela signifie que la chambre de pression de frein de parking 25 est alimentée.

Au contraire, la première chambre de détection 104 n'est quant à elle pas alimentée par le troisième agent de pression pneumatique.

Le piston de détection 103 est donc amené dans son second état par un premier effort égal à la somme des forces exercées par le deuxième agent de pression et par l'organe de rappel 105 ; soit respectivement environ la valeur de pression de frein de parking multipliée par la surface du piston 103 sur laquelle agit cette pression de frein de parking, additionnée de la force exercée par l'organe de rappel 105.

Dans ce second état du piston 103, la nervure 192 du piston est en butée sur l'épaulement 196 du corps 102, la tête d'extrémité 115 de l'organe mémoire 112 est à distance du piston 103 et cet organe mémoire 112 est dans sa deuxième position où il agit sur le commutateur 118 de l'organe d'indication 116 ; de sorte à indiquer que le frein de parking 7 n'est pas appliqué.

Sur la figure 6, la deuxième chambre de détection 106 et la chambre de verrouillage 114 sont vidangées par la commande du premier distributeur 52.

Le piston de détection 103 est uniquement sollicité sous la force exercée par l'organe de rappel 105 et reste dans son second état.

L'organe mémoire 112 est quant à lui sollicité par le ressort de rappel 113 et sa tête d'extrémité 115 vient s'appliquer, dans une position intermédiaire, sur le pourtour du piston de détection 103.

Dans le second état du piston de détection 103, sa rainure 193 est décalée par rapport et ne se trouve pas au droit de la tête d'extrémité 115 de l'organe mémoire 112 de sorte que ce dernier ne maintient pas en position le piston de détection 103.

Au surplus, dans la position intermédiaire de l'organe mémoire 112, ce dernier continue d'agir sur le commutateur 118 de l'organe d'indication 116 pour indiquer que le frein de parking 7 n'est pas appliqué.

Sur la figure 7, la première chambre de détection 104 est alimentée par le troisième agent de pression pneumatique par la commande du deuxième distributeur 62 et le piston de détection 103 est sollicité à l'encontre de l'organe de rappel 105.

Comme sur la figure 3, cela signifie que la chambre de pression de frein de service 13 est alimentée par le troisième agent de pression pneumatique.

Au contraire, la deuxième chambre de détection 106 et la chambre de verrouillage 114 restent vidangées.

Le piston de détection 103 est donc amené dans son premier état par un deuxième effort égal ici à environ la valeur de pression preset multipliée par la surface du piston 103 sur laquelle agit cette pression preset.

Ce deuxième effort est supérieur à la force exercée par l'organe de rappel 105 de sorte que, dans ce premier état du piston 103, sa nervure 192 est à distance de l'épaulement 196 du corps 102 et sa rainure 193 se retrouve alignée et au droit de la tête d'extrémité 115 de l'organe mémoire 112.

L'organe mémoire 112 est sollicité par le ressort de rappel 113 jusque sa première position, où sa tête d'extrémité 115 vient en butée dans la rainure 193 du piston 103 afin de maintenir ce dernier en position, dans son premier état.

Dans la première position de l'organe mémoire 112, ce dernier n'agit plus sur le commutateur 118 de l'organe d'indication 116, qui est déplacé pour changer l'alimentation du voyant lumineux, afin d'indiquer que le frein de parking 7 est désormais appliqué.

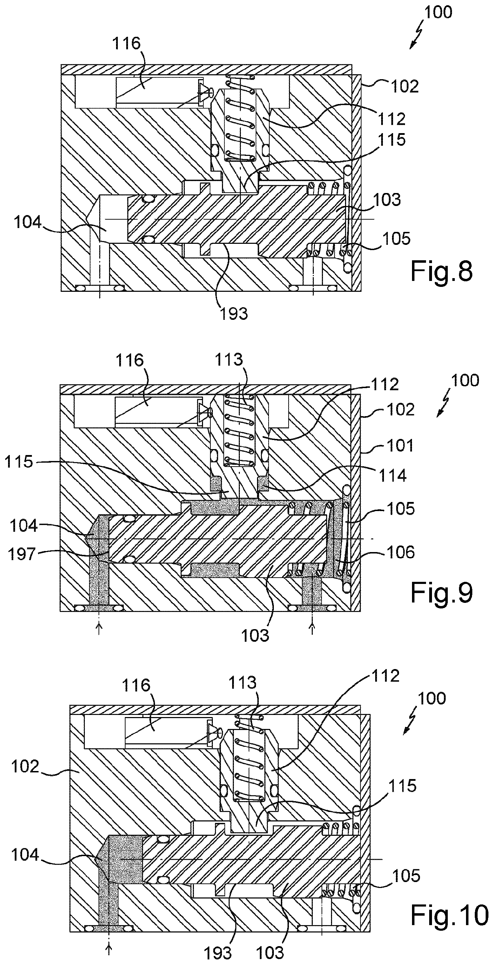

Sur la figure 8, la première chambre de détection 104 n'est plus alimentée par le troisième agent de pression pneumatique, par exemple du fait de fuites naturelles du système 1 et ici de la conduite preset 79.

Le piston de détection 103 a été déplacé légèrement sous l'action de l'organe de rappel élastique 105 mais reste maintenu dans son premier état par la coopération entre la tête d'extrémité 115 de l'organe mémoire 112 et la rainure 193 du piston 103.

L'indication selon laquelle le frein de parking 7 est appliqué reste donc mémorisée.

Les figures 9 et 10, associées aux figures 5 et 8, illustrent une seconde séquence permettant de détecter et de mémoriser que le frein de parking 7 a été appliqué. La figure 9 remplace la figure 6 et la figure 10 remplace la figure 7. Les configurations des figures 5 et 8 ne sont pas répétées.

Sur la figure 9, la deuxième chambre de détection 106 et la chambre de verrouillage 114 sont toujours alimentées par le deuxième agent de pression pneumatique via la conduite de frein de parking 71 ; tandis que la première chambre de détection 104 est elle aussi alimentée par le troisième agent de pression pneumatique grâce à la commande du deuxième distributeur 62.

Le piston de détection 103 est donc soumis, du côté de son extrémité libre 197, au deuxième effort égal ici à environ la valeur de pression preset multipliée par la surface du piston 103 sur laquelle agit cette pression preset ; et le piston 103 est aussi soumis, du côté opposé à son extrémité libre 197, au premier effort égal à la somme des forces exercées par le deuxième agent de pression et par l'organe de rappel 105.

Le dispositif de détection et de mémorisation 100 est ici configuré de sorte que le premier effort est supérieur au deuxième effort pour que le piston de détection 103 reste dans son second état.

L'organe mémoire 112 se trouve dans sa deuxième position où il agit sur le commutateur 118 de l'organe d'indication 116 de sorte à indiquer que le frein de parking 7 n'est pas appliqué.

Sur la figure 10, la deuxième chambre de détection 106 et la chambre de verrouillage 114 sont vidangées par la commande du premier distributeur 52.

Le piston de détection 103 est toujours soumis, du côté de son extrémité libre 197, au deuxième effort mais n'est plus soumis, du côté opposé à son extrémité libre 197, qu'à l'effort exercé par l'organe de rappel 105.

Le deuxième effort étant supérieur à la force exercée par l'organe de rappel 105, le piston de détection 103 est donc amené dans son premier état où sa nervure 192 est à distance de l'épaulement 196 du corps 102 et sa rainure 193 se retrouve alignée et au droit de la tête d'extrémité 115 de l'organe mémoire 112.

L'organe mémoire 112 est sollicité par le ressort de rappel 113 jusqu'à sa première position, où sa tête d'extrémité 115 vient en butée dans la rainure 193 du piston 103 afin de maintenir ce dernier en position, dans son premier état.

Dans la première position de l'organe mémoire 112, ce dernier n'agit plus sur le commutateur 118 de l'organe d'indication 116, qui est déplacé pour changer l'alimentation du voyant lumineux, afin d'indiquer que le frein de parking 7 est désormais appliqué.

Sur les figures 11 et 12, qui sont similaires aux figures 3 et 4, l'organe d'indication du dispositif de détection et de mémorisation est formé par un distributeur 125 du type valve pneumatique monostable, ayant un tiroir mobile à deux positions commandé par un actionneur 126 lui-même commandé par l'organe mémoire 112 décrit ci-dessus, et par un organe de rappel 127.

Dans une première position (figure 11), ce distributeur 125 présente un orifice d'entrée 135a bouché et connecté à une conduite de gestion 128 qui est raccordée par le piquage 84 à la conduite de commande 78, un orifice de sortie 136a connecté à un indicateur visuel 131 ayant deux positions et un ressort de rappel 132, ainsi qu'un orifice 137a débouchant à l'atmosphère et communiquant avec l'orifice de sortie 136a.

Le distributeur 125 est ici dans sa première position lorsque l'organe mémoire 112 n'agit pas sur l'actionneur 126 et que le frein de parking 7 est appliqué.

Dans une deuxième position (figure 12), ce distributeur 125 présente un orifice d'entrée 135b communiquant avec l'orifice de sortie 136b et alimentant par un agent de pression pneumatique l'indicateur visuel 131 qui passe d'une position à l'autre à l'encontre du ressort 132 ; tandis que l'orifice 137b est bouché.

Le distributeur 125 est ici dans sa deuxième position lorsque l'organe mémoire 112 agit sur l'actionneur 126 et que le frein de parking 7 n'est pas appliqué.

Optionnellement, l'organe d'indication du dispositif de détection et de mémorisation est aussi pourvu d'un indicateur à croix 133 ayant un ressort de rappel 134 et étant raccordé également à la conduite de commande 78 par l'intermédiaire d'une conduite auxiliaire 129 raccordée elle-même par un piquage 130 à la conduite de gestion 128.

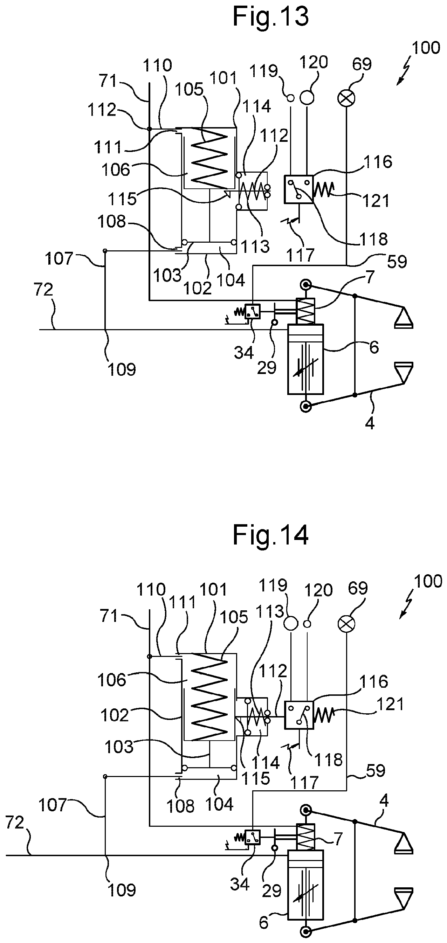

Les figures 13 et 14 sont identiques aux figures 3 et 4, à l'exception du fait que le dispositif de détection et de mémorisation 100 est ici configuré de sorte que la première conduite de détection 107 est raccordée directement à la conduite de frein 72 (c'est-à-dire après le dispositif de relayage, et avant ou après le dispositif d'anti-enrayage) plutôt qu'à la conduite preset 79.Le fonctionnement de ce dispositif se déduit de la description faite ci-dessus.

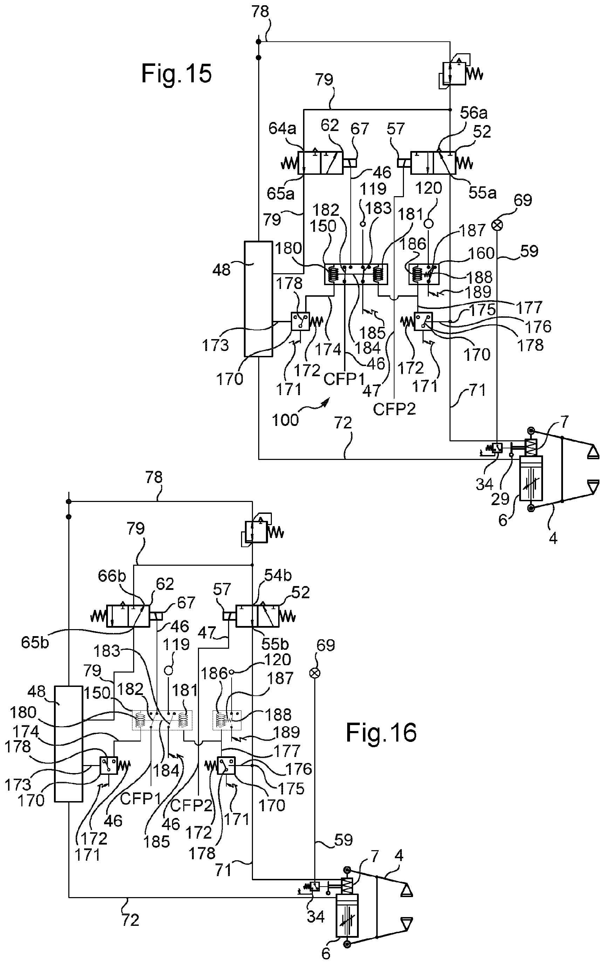

Les figures 15 et 16 représentent un système pourvu d'un dispositif de détection et de mémorisation 100 conforme à un second mode de réalisation.

Ici, l'actionneur 67 du deuxième distributeur 62 est configuré pour recevoir une consigne d'application de frein de parking CFP1 par une première ligne de commande 46 dédiée ; tandis que l'actionneur 57 du premier distributeur 52 est configuré pour recevoir une consigne d'application de frein de parking CFP2 par une deuxième ligne de commande 47 dédiée.

Le dispositif 100 comporte un premier contrôleur 160 configuré pour alimenter électriquement ou non un voyant lumineux 120 grâce à une source d'alimentation électrique 189.

Le dispositif 100 comporte en outre un deuxième contrôleur 150 interposé sur la première ligne de commande 46 et configuré d'une part, pour faire circuler ou non la consigne d'application de frein de parking CFP1 jusqu'à l'actionneur 67 du deuxième distributeur 62 et d'autre part, pour alimenter électriquement ou non un voyant lumineux 119 grâce à une source d'alimentation électrique 185.

Le dispositif 100 comporte en outre deux organes de gestion conditionnelle 170 pourvus chacun d'un commutateur 178, d'un organe de rappel 172 coopérant avec le commutateur 178 respectif et recevant chacun un signal d'alimentation 171.

Un premier des deux organes de gestion conditionnelle 170 est connecté par un premier tronçon de conduite 176 à la conduite de frein de parking 71 par l'intermédiaire d'un piquage 175, et est aussi connecté par un deuxième tronçon de conduite 177 à la fois au premier contrôleur 160 et au deuxième contrôleur 150.

Un second des deux organes de gestion conditionnelle 170 est connecté par un troisième tronçon de conduite 173 à la sous unité 48 et en particulier à la conduite de frein 72, entre le dispositif de relayage 93 et le dispositif anti-enrayage 98, et est aussi connecté par un quatrième tronçon de conduite 174 au deuxième contrôleur 150.

Le premier contrôleur 160 comporte une première bobine électrique 186 connectée au deuxième tronçon de conduite 177, un premier commutateur 188 configuré pour être actionné vers une position de travail par la première bobine électrique 186 lorsqu'elle est alimentée, et un ressort de rappel 187 configuré pour rappeler le commutateur 188 vers une position de repos lorsque la première bobine électrique 186 n'est pas alimentée.

Le deuxième contrôleur 150 comporte une deuxième bobine électrique 180 connectée au quatrième tronçon de conduite 174, une troisième bobine électrique 181 connectée au deuxième tronçon de conduite 177, ainsi qu'un deuxième commutateur 182 et un troisième commutateur 183 assujetti mécaniquement au deuxième commutateur 182 par une interface 184 ; les deuxième et troisième commutateurs 182 et 183 étant configurés pour être actionnés ensemble vers une position de travail par la deuxième bobine électrique 180 lorsqu'elle est alimentée et que la troisième bobine électrique 181 n'est pas alimentée, et vers une position de repos par la troisième bobine électrique 181 lorsqu'elle est alimentée et que la deuxième bobine électrique 180 n'est pas alimentée.

Sur la figure 15, par la commande CFP2, le premier distributeur 52 se trouve dans sa première position avec son unique orifice de sortie 55a connectée à son orifice 56a débouchant à l'atmosphère ; de sorte à permettre la vidange de la chambre de pression de frein de parking 25.

Le cas échéant, le commutateur 178 du premier des deux organes de gestion conditionnelle 170 n'établit pas de chemin électrique entre l'alimentation 171 et le deuxième tronçon de conduite 177 et n'alimente pas les première et troisième bobines électriques 186 et 181.

Ainsi, le premier commutateur 188 n'est pas sollicité par la première bobine 186 et n'établit pas non plus de chemin électrique entre l'alimentation 189 et le voyant lumineux 120, qui est donc éteint.

Le deuxième distributeur 62 se trouve dans sa première position, où son unique orifice d'entrée 64a et son unique orifice de sortie 65a communiquent, pour alimenter la chambre de pression de frein de service 13 avec le troisième agent de pression pneumatique.

Le commutateur 178 du second des deux organes de gestion conditionnelle 170 établit un chemin électrique entre l'alimentation 171 et le quatrième tronçon de conduite 174 et alimente ainsi la deuxième bobine électrique 180.

Les deuxième et troisième commutateurs 182 et 183 sont alors sollicités dans leur position de travail par la deuxième bobine 180, établissant ainsi un chemin électrique entre l'alimentation 185 et le voyant lumineux 119 qui est donc allumé.

Ce voyant 119 permet donc d'indiquer que le frein de parking 7 est appliqué.

On notera que cette indication est mémorisée et conservée même si la valeur de pression dans la conduite de frein 72 diminue ou s'annule (par exemple à cause des fuites), car le deuxième contrôleur 150 est dépourvu de ressort de rappel des deuxième et troisième commutateurs 182 et 183, qui restent donc dans leur position de travail.

Sur la figure 16, par la commande CFP2, le premier distributeur 52 se trouve dans sa deuxième position avec son unique orifice d'entrée 54b qui communique avec son unique orifice de sortie 55b pour alimenter la chambre de pression de frein de parking 25.

Le cas échéant, le commutateur 178 du premier des deux organes de gestion conditionnelle 170 établit un chemin électrique entre l'alimentation 171 et le deuxième tronçon de conduite 177 et alimente les première et troisième bobines électriques 186 et 181.

Ainsi, le premier commutateur 188 est sollicité par la première bobine 186 et établit un chemin électrique entre l'alimentation 189 et le voyant lumineux 120, qui est donc allumé.

Ce voyant 120 permet donc d'indiquer que le frein de parking 7 n'est pas appliqué.

La valeur de pression dans la conduite de frein 72 est telle que le commutateur 178 du second des deux organes de gestion conditionnelle 170 n'établit pas de chemin électrique entre l'alimentation 171 et le quatrième tronçon de conduite 174 et donc n'alimente pas la deuxième bobine électrique 180.

Les deuxième et troisième commutateurs 182 et 183 sont alors sollicités dans leur position de repos par la troisième bobine 181, coupant ainsi le chemin électrique entre l'alimentation 185 et le voyant lumineux 119 qui est donc éteint et autorisant au surplus la commande CFP1 à cheminer jusqu'à l'actionneur 67 du deuxième distributeur.

Le deuxième distributeur 62 se trouve dans sa deuxième position où son unique orifice de sortie 65b communique avec son orifice 66b débouchant à l'atmosphère.

Dans une variante non illustrée, les distributeurs 52 et 62 sont doublés par d'autres premier et second distributeurs disposés en série avec les premier et second distributeurs.

Dans une variante non illustrée, l'unité peut comporter un dispositif de test du frein de parking, pourvu de lignes de test raccordées aux actionneurs des distributeurs.

Dans une variante de réalisation non illustrée, les distributeurs 52 et 62 sont configurés de sorte que le frein de parking 7 ne doit pas être appliqué lorsque la consigne d'application du frein de parking CFP est nulle. Il s'agit d'une application dite de disponibilité.

La différence par rapport aux distributeurs illustrés sur les figures 2 à 4 réside dans le fait que les première et deuxième positions respectives sont inversées.

En d'autres termes, lorsque la consigne d'application du frein de parking CPF est nulle, le premier distributeur 52 présente une première position par défaut dite de disponibilité dans laquelle son unique orifice de sortie 55a connecté à la conduite de frein de parking 71 communique avec son unique orifice d'entrée 54a connectée à la conduite de commande 78, tandis que son orifice débouchant à l'atmosphère 56a est bouché.

Le second distributeur 62 présente quant à lui une première position par défaut dite aussi de disponibilité dans laquelle son unique orifice de sortie 65a communique avec son orifice 66a à l'atmosphère, tandis que son unique orifice d'entrée 64a connectée à la conduite de commande 78 est bouché.

Au contraire, lorsque la consigne d'application du frein de parking CPF est non nulle, le premier distributeur 52 présente une seconde position dans laquelle son unique orifice de sortie 55b communique avec son orifice débouchant à l'atmosphère 56b, tandis que son unique orifice d'entrée 54b est bouché ; et le second distributeur 62 présente quant à lui une seconde position dans laquelle son unique orifice de sortie 65b communique avec son unique orifice d'entrée 64b, tandis que son orifice 66b à l'atmosphère est bouché.

Dans des variantes non illustrées :
- les distributeurs sont bistables plutôt que monostables, ils comportent chacun deux actionneurs et l'unité est pourvue de deux lignes de commande raccordée chacune à un actionneur sur chaque distributeur ;
- le système de freinage ferroviaire peut comporter un frein de service dépourvu de pièce de coin attachée au piston de freinage, de sorte que ce piston agit directement sur la tige de poussée, lequel agit sur les leviers déformables ; et dans ce cas, le piston de freinage ensemble avec sa tige crantée et la tige de poussée sont mobiles dans la deuxième direction axiale tandis que le frein de parking est configuré de sorte que le doigt de blocage et le piston de maintien sont mobiles dans la première direction axiale ;
- le système de freinage ferroviaire présente une timonerie de freinage différente de celle illustrée sur les figures, en particulier, la timonerie de freinage comporte une semelle configurée pour agir directement sur une roue du véhicule ferroviaire, cette semelle étant directement articulée par une articulation du type pivot fixée à la tige de poussée, un levier rigide fixé au corps du système ainsi qu'un levier déformable fixé à la fois au levier rigide et à l'articulation sur la semelle ; et/ou
- le système de freinage ferroviaire comporte une timonerie de freinage configurée pour agir sur un frein à semelles comme décrit ci-dessus et est pourvu d'un frein de service avec ou sans pièce de coin attachée au piston de freinage.

On rappelle plus généralement que l'invention ne se limite pas aux exemples décrits et représentés.

## Revendications

1. Système de freinage ferroviaire pour véhicule ferroviaire à freins à au moins une garniture ou à au moins une semelle (5), comportant un corps (2), une timonerie de freinage (4) configurée pour agir sur au moins un dit frein (5), un frein de service (6) comportant un piston de freinage (8) mobile par rapport audit corps (2) pour agir sur ladite timonerie de freinage (4) et délimitant avec ledit corps (2) une chambre de pression de frein de service (13) configurée pour être alimentée par un premier agent de pression pneumatique pour mettre ledit piston de freinage (8) dans une position de freinage de service, ainsi qu'un frein de parking (7) configuré pour agir sur ledit piston de freinage (8) dudit frein de service (6) et admettant une configuration de travail et une configuration de repos ;
ledit frein de parking (7) comportant un dispositif de blocage (20) mobile par rapport audit corps (2) pour agir sur ledit piston de freinage (8) et admettant une première position et une seconde position dans laquelle ledit dispositif de blocage (20) est configuré pour immobiliser ledit piston de freinage (8) en position de freinage de service, ledit frein de parking (7) étant alors en configuration de travail, et un dispositif de commande (23, 24) mobile par rapport audit corps (2) et admettant une position de verrouillage dans laquelle ledit dispositif de commande (23, 24) est configuré pour maintenir ledit dispositif de blocage (20) dans sa seconde position ;
ledit système de freinage ferroviaire (1) étant configuré pour alimenter la chambre de pression de frein de service (13) avec un autre agent de pression pneumatique dont la valeur de pression est déterminée, de sorte à appliquer un effort de freinage déterminé lorsque ledit frein de parking (7) est en configuration de travail ; et
ledit système de freinage ferroviaire (1) comportant en outre un dispositif de détection et de mémorisation (100) configuré pour recevoir une première information représentative de la position du dispositif de blocage (20), recevoir une deuxième information représentative de l'alimentation de la chambre de pression de frein de service (13) par l'autre agent de pression pneumatique, déduire desdites première et deuxième informations représentatives une information représentative de l'application du frein de parking, et mémoriser ladite information représentative déduite ; grâce à quoi ladite information représentative de l'application du frein de parking est conservée même si la chambre de pression de frein de service (13) n'est plus alimentée par l'autre agent de pression pneumatique.

2. Système selon la revendication 1, **caractérisé en ce que** ledit dispositif de commande (23, 24) délimite avec ledit corps (2) une chambre de pression de frein de parking (25) configurée pour être alimentée par un deuxième agent de pression pneumatique, et admettant une position de verrouillage dans laquelle ledit dispositif de commande (23, 24) est configuré pour maintenir ledit dispositif de blocage (20) dans sa seconde position ; et ladite première information représentative est une valeur de pression dudit deuxième agent de pression pneumatique prise dans une conduite de frein de parking (71) alimentant ladite chambre de pression de frein de parking (25).

3. Système selon la revendication 2, **caractérisé en ce que** ledit système de freinage ferroviaire (1) comporte un premier dispositif de distribution pneumatique dédié (51) connecté à une source d'alimentation en agents de pression pneumatique (73) et connecté à ladite chambre de pression de frein de parking (25) afin de l'alimenter avec ledit deuxième agent de pression pneumatique ou de la vidanger pour mettre ledit frein de parking (7) respectivement dans ses configurations de repos et de travail, ainsi qu'un second dispositif de distribution pneumatique dédié (61) connecté à ladite source d'alimentation en agents de pression pneumatique (73) et connecté à ladite chambre de pression de frein de service (13) afin de l'alimenter avec l'autre, dit troisième, agent de pression pneumatique dont la valeur de pression est déterminée, de sorte à appliquer un effort de freinage déterminé lorsque ledit frein de parking (7) est en configuration de travail ; lesdits premier et deuxième dispositifs de distribution pneumatiques dédiés (51, 61) étant configurés pour être commandés par au moins un signal de commande (CFP, CFP1, CFP2).

4. Système selon l'une des revendications 2 et 3, **caractérisé en ce que** ledit dispositif de détection et de mémorisation (100) comporte un corps (102), un piston de détection (103) monté mobile dans le corps (102) et définissant avec ce dernier une première chambre de détection (104) et une deuxième chambre de détection (106) distincte de la première chambre de détection, un organe de rappel élastique (105) disposé dans la deuxième chambre de détection (106) et configuré pour solliciter le piston de détection (103), un organe dit mémoire (112) monté mobile également dans le corps (102), définissant avec ce dernier une chambre de verrouillage (114) en communication fluidique avec la deuxième chambre de détection (106), et étant configuré pour agir sur le piston de détection (103) via un ressort de rappel (113), de sorte à maintenir ce piston de détection (103) dans une position prédéterminée.

5. Système selon la revendication 4, **caractérisé en ce que** le corps (102) comporte un premier orifice de détection (108) débouchant dans la première chambre de détection (104) et communiquant avec une première conduite de détection (107) raccordée à une conduite alimentant la chambre de pression de frein de service (13) ; la première chambre de détection (104) étant configurée pour être alimentée, via la première conduite de détection (107), par l'autre, dit troisième, agent de pression pneumatique lorsqu'il alimente la chambre de pression de frein de service (13) et pour être vidangée lorsqu'il n'alimente pas la chambre de pression de frein de service (13).

6. Système selon l'une des revendications 4 et 5, **caractérisé en ce que** le corps (102) comporte en outre un deuxième orifice de détection (111) débouchant dans la deuxième chambre de détection (106) et communiquant avec une deuxième conduite de détection (110) raccordée à une conduite alimentant la chambre de pression de frein de parking (25) ; la deuxième chambre de détection (106) étant configurée pour être alimentée, via la deuxième conduite de détection (110), par le deuxième agent de pression pneumatique lorsqu'il alimente la chambre de pression de frein de parking (25) et pour être vidangée lorsqu'il n'alimente pas la chambre de pression de frein de parking (25).

7. Système selon l'une quelconque des revendications 4 à 6, **caractérisé en ce que** ledit dispositif de détection et de mémorisation (100) comporte en outre organe d'indication (116) à plusieurs voyants lumineux (119, 120) et présentant un signal d'alimentation (117), un commutateur (118) et un ressort de rappel (121) coopérant avec le commutateur (118) ; et ledit dispositif de détection et de mémorisation (100) est configuré de sorte que le déplacement de l'organe mémoire (112) dans le corps (102) permet d'agir sur le commutateur (118) à l'encontre du ressort de rappel (121) pour l'alimentation d'un des voyants lumineux.

8. Système selon l'une quelconque des revendications 4 à 7, **caractérisé en ce que** ledit dispositif de détection et de mémorisation (100) est configuré de sorte que, lorsque la chambre de pression de frein de parking (25) est vidangée, la deuxième chambre de détection (106) et la chambre de verrouillage (114) ne sont pas alimentées, le piston de détection (103) est sollicité par l'organe de rappel élastique (105), l'organe mémoire (112) est sollicité par le ressort de rappel (113), la première chambre de détection (104) est quant à elle alimentée par l'autre, dit troisième, agent de pression pneumatique et sollicite le piston de détection (103) à l'encontre de l'organe de rappel (105) ; de sorte à mettre le piston de détection (103) dans un premier état où l'organe mémoire (112) vient le maintenir en position.

9. Système selon l'une quelconque des revendications 4 à 8, **caractérisé en ce que** ledit dispositif de détection et de mémorisation (100) est configuré de sorte que, lorsque la chambre de pression de frein de parking (25) est alimentée, la deuxième chambre de détection (106) et la chambre de verrouillage (114) sont alimentées, le piston de détection (103) est sollicité par l'organe de rappel élastique (105) et aussi par le deuxième agent de pression pneumatique, l'organe mémoire (112) est déplacé à l'encontre du ressort de rappel (113), la première chambre de détection (104) n'est quant à elle pas alimentée par le troisième agent de pression pneumatique ; de sorte que le piston de détection (103) se trouve ainsi dans un second état où l'organe mémoire (112) n'agit pas sur ce dernier.

10. Système selon l'une quelconque des revendications 4 à 9, **caractérisé en ce que** le piston de détection (103) présente une rainure (193) formée sur le pourtour du piston de détection (103), du côté de la deuxième chambre de détection (106), et l'organe mémoire (112) est logé dans une cavité (190) du corps (102) et est pourvu d'une tête d'extrémité (115) configurée pour venir en butée dans la rainure (193) ménagée sur le piston de détection (103) lorsque ce dernier se trouve dans un premier état où l'organe mémoire (112) vient le maintenir en position.

11. Système selon l'une quelconque des revendications 4 à 10, **caractérisé en ce que** le piston de détection (103) présente en outre une nervure (192) formée sur le pourtour du piston de détection (103), du côté de la deuxième chambre de détection (106), et le corps (102) est pourvu d'un épaulement (196) contre lequel ladite nervure(192) est configurée pour venir en butée, lorsque le piston de détection (103) se trouve dans un second état où l'organe mémoire (112) n'agit pas sur ce dernier.

12. Système selon l'une des revendications 10 et 11, **caractérisé en ce que** le piston de détection (103) est amené dans son second état par un premier effort égal à la somme des forces exercées par le deuxième agent de pression et par l'organe de rappel (105) ; soit respectivement environ la valeur de pression de frein de parking multipliée par la surface du piston de détection (103) sur laquelle agit cette pression de frein de parking, , additionnée de la force exercée par l'organe de rappel (105).

13. Système selon l'une quelconque des revendications 10 à 12, **caractérisé en ce que** le piston de détection (103) est amené dans son premier état par un deuxième effort égal ici à environ la valeur de pression de l'autre, dit troisième, agent de pression pneumatique, multipliée par la surface du piston de détection (103) sur laquelle agit cet autre agent, au niveau d'une extrémité libre (197) du piston de détection (103).

14. Système selon les revendications 12 et 13, **caractérisé en ce que** le deuxième effort est supérieur à la force exercée par l'organe de rappel (105) de sorte que, dans le premier état du piston de détection (103), sa nervure (192) est à distance de l'épaulement (196) du corps (102) et sa rainure (193) se retrouve alignée et au droit de la tête d'extrémité (115) de l'organe mémoire (112).

15. Système selon les revendications 12 et 13, **caractérisé en ce que** le piston de détection (103) est soumis, du côté d'une extrémité libre (197), au deuxième effort et du côté opposé à son extrémité libre (197), au premier effort ; et le dispositif de détection et de mémorisation (100) est ici configuré de sorte que le premier effort est supérieur au deuxième effort.

16. Système selon l'une des revendications 2 et 3, **caractérisé en ce que** ledit dispositif de détection et de mémorisation (100) comporte un premier contrôleur (160) configuré pour recevoir ladite première information représentative et un deuxième contrôleur (150) configuré pour recevoir ladite deuxième information représentative.

17. Système selon la revendication 16, **caractérisé en ce que** ledit dispositif de détection et de mémorisation (100) comporte en outre deux organes de gestion conditionnelle (170) pourvus chacun d'un commutateur (178), d'un organe de rappel (172) coopérant avec le commutateur (178) respectif et recevant chacun un signal d'alimentation (171), un premier des deux organes de gestion conditionnelle (170) étant connecté par un premier tronçon de conduite (176) à une conduite alimentant la chambre de pression de frein de parking (25), et est aussi connecté par un deuxième tronçon de conduite (177) à la fois au premier contrôleur (160) et au deuxième contrôleur (150), et un second des deux organes de gestion conditionnelle (170) est connecté par un troisième tronçon de conduite (173) à une conduite alimentant la chambre de pression de frein de service (13) et est aussi connecté par un quatrième tronçon de conduite (174) au deuxième contrôleur (150).

18. Système selon la revendication 17, **caractérisé en ce que** ledit actionneur (67) est configuré pour recevoir une consigne d'application de frein de parking (CFP1) par une première ligne de commande (46) dédiée ; tandis que l'actionneur (57) est configuré pour recevoir une consigne d'application de frein de parking (CFP2) par une deuxième ligne de commande (47) dédiée ; le premier contrôleur (160) est configuré pour alimenter électriquement ou non un voyant lumineux (120) grâce à une source d'alimentation électrique (189), et le deuxième contrôleur (150) est interposé sur la première ligne de commande (46) et configuré d'une part, pour faire circuler ou non la consigne d'application de frein de parking (CFP1) jusqu'à l'actionneur (67) et d'autre part, pour alimenter électriquement ou non un voyant lumineux (119) grâce à une source d'alimentation électrique (185).

19. Système selon l'une des revendications 17 et 18, **caractérisé en ce que** le premier contrôleur (160) comporte une première bobine électrique (186) connectée au deuxième tronçon de conduite (177), un premier commutateur (188) configuré pour être actionné vers une position de travail par la première bobine électrique (186) lorsqu'elle est alimentée, et un ressort de rappel (187) configuré pour rappeler le commutateur (188) vers une position de repos lorsque la première bobine électrique (186) n'est pas alimentée ; et le deuxième contrôleur (150) comportant une deuxième bobine électrique (180) connectée au quatrième tronçon de conduite (174), une troisième bobine électrique (181) connectée au deuxième tronçon de conduite (177), ainsi qu'un deuxième commutateur (182) et un troisième commutateur (183) assujetti mécaniquement au deuxième commutateur (182) par une interface (184) ; les deuxième et troisième commutateurs (182, 183) étant configurés pour être actionnés ensemble vers une position de travail par la deuxième bobine électrique (180) lorsqu'elle est alimentée et que la troisième bobine électrique (181) n'est pas alimentée, et vers une position de repos par la troisième bobine électrique (181) lorsqu'elle est alimentée et que la deuxième bobine électrique (180) n'est pas alimentée.

20. Système selon la revendication 19, **caractérisé en ce que**, le premier dispositif de distribution (51) est commandé pour permettre de vidanger la chambre de pression de frein de parking (25), le commutateur (178) du premier des deux organes de gestion conditionnelle (170) n'établit pas de chemin électrique entre l'alimentation (171) et le deuxième tronçon de conduite (177) et n'alimente pas les première et troisième bobines électriques (186, 181), le premier commutateur (188) du premier contrôleur (160) n'est pas sollicité par la première bobine (186) et n'établit pas de chemin électrique entre l'alimentation (189) et le voyant lumineux (120) est éteint, le deuxième dispositif de distribution (61) permet d'alimenter la chambre de pression de frein de service (13) avec le troisième agent de pression pneumatique, le commutateur (178) du second des deux organes de gestion conditionnelle (170) établit un chemin électrique entre l'alimentation (171) et le quatrième tronçon de conduite (174) et alimente la deuxième bobine électrique (180), les deuxième et troisième commutateurs (182, 183) sont sollicités dans leur position de travail par la deuxième bobine (180), établissant ainsi un chemin électrique entre l'alimentation (185) et le voyant lumineux (119) qui est allumé; de sorte à indiquer que le frein de parking (7) est appliqué.

21. Système selon l'une des revendications 19 et 20, **caractérisé en ce que**, le premier dispositif de distribution (51) est commandé pour permettre d'alimenter la chambre de pression de frein de parking (25), le commutateur (178) du premier des deux organes de gestion conditionnelle (170) établit un chemin électrique entre l'alimentation (171) et le deuxième tronçon de conduite (177) et alimente les première et troisième bobines électriques (186, 181), le premier commutateur (188) est sollicité par la première bobine (186) et établit un chemin électrique entre l'alimentation (189) et le voyant lumineux (120) qui est allumé, le commutateur (178) du second des deux organes de gestion conditionnelle (170) n'établit pas de chemin électrique entre l'alimentation (171) et le quatrième tronçon de conduite (174) et donc n'alimente pas la deuxième bobine électrique (180), les deuxième et troisième commutateurs (182, 183) sont sollicités dans leur position de repos par la troisième bobine (181), coupant le chemin électrique entre l'alimentation (185) et le voyant lumineux (119) qui est éteint et autorisant le signal de frein de parking (CFP1) à cheminer jusqu'à l'actionneur (67) du deuxième dispositif de distribution (61).

22. Procédé de freinage d'un véhicule ferroviaire comportant un système de freinage ferroviaire (1) selon l'une quelconque des revendications 1 à 21, comportant :
- l'étape de recevoir une information représentative de la position du doigt de blocage (20) ;
- l'étape de recevoir une information représentative de l'alimentation par un autre agent de pression pneumatique de la chambre de pression de frein de service (13) ;
- l'étape de déduire desdites informations représentatives reçues, une information représentative de l'application du frein de parking (7) ; et
- l'étape de mémoriser ladite information représentative déduite.

23. Procédé selon la revendication 22, **caractérisé en ce qu'**il comporte au préalable, simultanément ou successivement quel que soit l'ordre, les étapes de commander le déplacement du doigt de blocage (20) dans sa seconde position de sorte mettre le frein de parking (7) dans sa configuration de travail et de commander l'alimentation de la chambre de pression de frein de service (13) avec l'autre agent de pression pneumatique de sorte à appliquer un effort de freinage déterminé.

## Patentansprüche

1. Schienenbremssystem für ein Schienenfahrzeug mit Bremsen mit zumindest einem Bremsbelag oder zumindest einer Bremssohle (5), enthaltend einen Bremskörper (2), ein Bremsgestänge (4), das dazu ausgelegt ist, auf die zumindest eine Bremse (5) einzuwirken, eine Betriebsbremse (6), die einen relativ zu dem Bremskörper (2) beweglichen Bremskolben (8) zum Einwirken auf das Bremsgestänge (4) enthält und mit dem Bremskörper (2) eine Betriebsbremsdruckkammer (13) begrenzt, die dazu ausgelegt ist, mit einem ersten pneumatischen Druckmittel versorgt zu werden, um den Bremskolben (8) in eine Betriebsbremsposition zu bringen, sowie eine Feststellbremse (7), die dazu ausgelegt ist, auf den Bremskolben (8) der Betriebsbremse (6) einzuwirken und eine Arbeitsstellung und eine Ruhestellung einnehmen kann;
wobei die Feststellbremse (7) eine relativ zum Bremskörper (2) bewegliche Sperrvorrichtung (20) zum Einwirken auf den Bremskolben (8) enthält und eine erste Position und eine zweite Position einnehmen kann, in der die Sperrvorrichtung (20) dazu ausgelegt ist, den Bremskolben (8) in der Betriebsbremsposition festzulegen, wobei sich die Feststellbremse (7) dann in der Arbeitsstellung befindet, und eine Steuervorrichtung (23, 24), die relativ zum Bremskörper (2) beweglich ist und eine Verriegelungsposition einnehmen kann, in der die Steuervorrichtung (23, 24) dazu ausgelegt ist, die Sperrvorrichtung (20) in ihrer zweiten Position zu halten;
wobei das Schienenbremssystem (1) dazu ausgelegt ist, die Betriebsbremsdruckkammer (13) mit einem weiteren pneumatischen Druckmittel zu versorgen, dessen Druckwert vorbestimmt ist, so dass eine vorbestimmte Bremskraft aufgebracht wird, wenn sich die Feststellbremse (7) in Arbeitsstellung befindet; und
wobei das Schienenbremssystem (1) ferner eine Erfassungs- und Speichervorrichtung (100) enthält, die dazu ausgelegt ist, um eine erste Information zu empfangen, die für die Position der Sperrvorrichtung (20) repräsentativ ist, um eine zweite Information zu empfangen, die für die Versorgung der Betriebsbremsdruckkammer (13) mit dem weiteren pneumatischen Druckmittel repräsentativ ist, um aus der ersten und zweiten repräsentativen Information eine Information abzuleiten, die für das Betätigen der Feststellbremse repräsentativ ist, und um die abgeleitete repräsentative Information abzuspeichern; wodurch die für das Betätigen der Feststellbremse repräsentative Information auch dann erhalten bleibt, wenn die Betriebsbremsdruckkammer (13) nicht mehr mit dem weiteren pneumatischen Druckmittel versorgt wird.

2. System nach Anspruch 1, **dadurch gekennzeichnet, dass** die Steuervorrichtung (23, 24) mit dem Bremskörper (2) eine Feststellbremsdruckkammer (25) begrenzt, die dazu ausgelegt ist, mit einem zweiten pneumatischen Druckmittel versorgt zu werden und eine Verriegelungsposition einnehmen kann, in welcher die Steuervorrichtung (23, 24) dazu ausgelegt ist, die Sperrvorrichtung (20) in ihrer zweiten Position zu halten; und die erste repräsentative Information ein Druckwert des zweiten pneumatischen Druckmittels ist, der in einer Feststellbremsleitung (71) abgegriffen wird, über welche die Feststellbremsdruckkammer (25) versorgt wird.

3. System nach Anspruch 2, **dadurch gekennzeichnet, dass** das Schienenbremssystem (1) eine zugeordnete erste pneumatische Verteilervorrichtung (51) enthält, die mit einer Versorgungsquelle zur Versorgung mit pneumatischen Druckmitteln (73) verbunden ist und mit der Feststellbremsdruckkammer (25) verbunden ist, um diese mit dem zweiten pneumatischen Druckmittel zu versorgen oder zu entleeren, um die Feststellbremse (7) in ihre Ruhe- bzw. Arbeitsstellung zu bringen, sowie eine zugeordnete zweite pneumatische Verteilervorrichtung (61), die mit der Versorgungsquelle zur Versorgung mit pneumatischen Druckmitteln (73) verbunden ist und mit der Betriebsbremsdruckkammer (13) verbunden ist, um diese mit dem weiteren, dem dritten, pneumatischen Druckmittel zu versorgen, dessen Druckwert vorbestimmt ist, so dass eine vorbestimmte Bremskraft aufgebracht wird, wenn sich die Feststellbremse (7) in Arbeitsstellung befindet; wobei die zugeordnete erste und die zweite pneumatische Verteilervorrichtung (51, 61) dazu ausgelegt sind, um über zumindest ein Steuersignal (CFP, CFP1, CFP2) gesteuert zu werden.

4. System nach einem der Ansprüche 2 und 3, **dadurch gekennzeichnet, dass** die Erfassungs- und Speichervorrichtung (100) einen Körper (102), einen Erfassungskolben (103), der in dem Körper (102) beweglich gelagert ist und mit diesem eine erste Erfassungskammer (104) und eine zweite Erfassungskammer (106) definiert, die sich von der ersten Erfassungskammer unterscheidet, ein Federrückstellglied (105), das in der zweiten Erfassungskammer (106) angeordnet und dazu ausgelegt ist, den Erfassungskolben (103) zu beaufschlagen, und ein Speicherglied (112) enthält, das auch in dem Körper (102) beweglich gelagert ist und mit letzterem eine Verriegelungskammer (114) in Strömungsverbindung mit der zweiten Erfassungskammer (106) definiert und dazu ausgelegt ist, über eine Rückstellfeder (113) auf den Erfassungskolben (103) einzuwirken, so dass dieser Erfassungskolben (103) in einer vorgestimmten Position gehalten wird.

5. System nach Anspruch 4, **dadurch gekennzeichnet, dass** der Körper (102) eine erste Erfassungsöffnung (108) aufweist, die in die erste Erfassungskammer (104) mündet und mit einer ersten Erfassungsleitung (107) kommuniziert, die an eine die Betriebsbremsdruckkammer (13) versorgende Leitung angeschlossen ist; wobei die erste Erfassungskammer (104) dazu ausgelegt ist, über die erste Erfassungsleitung (107) mit dem weiteren, dritten, pneumatischen Druckmittel versorgt zu werden, wenn die Betriebsbremsdruckkammer (13) damit versorgt wird, und um entleert zu werden, wenn die Betriebsbremsdruckkammer (13) nicht damit versorgt wird.

6. System nach einem der Ansprüche 4 und 5, **dadurch gekennzeichnet, dass** der Körper (102) ferner eine zweite Erfassungsöffnung (111) aufweist, die in die zweite Erfassungskammer (106) mündet und mit einer zweiten Erfassungsleitung (110) kommuniziert, die an eine die Feststellbremsdruckkammer (25) versorgende Leitung angeschlossen ist; wobei die zweite Erfassungskammer (106) dazu ausgelegt ist, über die zweite Erfassungsleitung (110) mit dem zweiten pneumatischen Druckmittel versorgt zu werden, wenn die Feststellbremsdruckkammer (25) damit versorgt wird, und um entleert zu werden, wenn die Feststellbremsdruckkammer (25) nicht damit versorgt wird.

7. System nach einem der Ansprüche 4 bis 6, **dadurch gekennzeichnet, dass** die Erfassungs- und Speichervorrichtung (100) ferner eine Anzeigeeinrichtung (116), die mehrere Kontrollleuchten (119, 120) enthält und ein Versorgungssignal (117) aufweist, sowie einen Schalter (118) und eine Rückstellfeder (121) enthält, die mit dem Schalter (118) zusammenwirkt; und die Erfassungs- und Speichervorrichtung (100) so ausgelegt ist, dass die Verlagerung des Speicherglieds (112) in dem Körper (102) gestattet, zur Versorgung einer der Kontrollleuchten entgegen der Rückstellfeder (121) auf den Schalter (118) einzuwirken.

8. System nach einem der Ansprüche 4 bis 7, **dadurch gekennzeichnet, dass** die Erfassungs- und Speichervorrichtung (100) so ausgelegt ist, dass dann, wenn die Feststellbremsdruckkammer (25) entleert wird, die zweite Erfassungskammer (106) und die Verriegelungskammer (114) nicht versorgt werden, der Erfassungskolben (103) über das Federrückstellglied (105) beaufschlagt wird, das Speicherglied (112) über die Rückstellfeder (113) beaufschlagt wird, die erste Erfassungskammer (104) ihrerseits mit dem weiteren, dritten, pneumatischen Druckmittel versorgt wird und den Erfassungskolben (103) entgegen der Rückstellfeder (105) beaufschlagt; so dass der Erfassungskolben (103) in einen ersten Zustand versetzt wird, wo das Speicherglied (112) diesen in Stellung hält.

9. System nach einem der Ansprüche 4 bis 8, **dadurch gekennzeichnet, dass** die Erfassungs- und Speichervorrichtung (100) so ausgelegt ist, dass dann, wenn die Feststellbremsdruckkammer (25) versorgt wird, die zweite Erfassungskammer (106) und die Verriegelungskammer (114) versorgt werden, der Erfassungskolben (103) über das Federrückstellglied (105) beaufschlagt wird und auch mit dem zweiten pneumatischen Druckmittel versorgt wird, das Speicherglied (112) entgegen der Rückstellfeder (113) verlagert wird, und die erste Erfassungskammer (104) ihrerseits nicht mit dem dritten pneumatischen Druckmittel versorgt wird; so dass der Erfassungskolben (103) sich somit in einem zweiten Zustand befindet, wo das Speicherglied (112) nicht auf letzteren einwirkt.

10. System nach einem der Ansprüche 4 bis 9, **dadurch gekennzeichnet, dass** der Erfassungskolben (103) eine Nut (193) aufweist, die am Umfang des Erfassungskolbens (103) auf der Seite der zweiten Erfassungskammer (106) ausgebildet ist, und das Speicherglied (112) in einem Hohlraum (190) des Körpers (102) aufgenommen und mit einem Endkopf (115) versehen ist, der dazu ausgelegt ist, in der am Erfassungskolben (103) ausgebildeten Nut (193) in Anschlag zu gelangen, wenn letzterer sich in einem ersten Zustand befindet, wo das Speicherglied (112) diesen in Stellung hält.

11. System nach einem der Ansprüche 4 bis 10, **dadurch gekennzeichnet, dass** der Erfassungskolben (103) ferner eine Rippe (192) aufweist, die am Umfang des Erfassungskolbens (103) auf der Seite der zweiten Erfassungskammer (106) ausgebildet ist, und der Körper (102) mit einer Schulter (196) versehen ist, an die die Rippe (192) in Anschlag gelangen soll, wenn der Erfassungskolben (103) sich in einem zweiten Zustand befindet, wo das Speicherglied (112) nicht auf diesen einwirkt.

12. System nach einem der Ansprüche 10 und 11, **dadurch gekennzeichnet, dass** der Erfassungskolben (103) mit einer ersten Kraft in seinen zweiten Zustand gebracht wird, welche Kraft gleich der Summe der von dem zweiten Druckmittel und von dem Rückstellglied (105) ausgeübten Kräfte ist; und in etwa dem Feststellbremsdruckwert, multipliziert mit der Fläche des Erfassungskolbens (103), auf welche dieser Feststellbremsdruck wird, addiert mit der von dem Rückstellglied (105) ausgeübten Kraft, entspricht.

13. System nach einem der Ansprüche 10 bis 12, **dadurch gekennzeichnet, dass** der Erfassungskolben (103) mit einer zweiten Kraft in seinen ersten Zustand gebracht wird, welche Kraft dabei etwa gleich dem Druckwert des weiteren, dritten, pneumatischen Druckmittels, multipliziert mit der Fläche des Erfassungskolbens (103), auf welche dieses weitere Druckmittel wirkt, im Bereich eines freien Endes (197) des Erfassungskolbens (103) ist.

14. System nach den Ansprüchen 12 und 13, **dadurch gekennzeichnet, dass** die zweite Kraft größer als die von dem Rückstellglied (105) ausgeübte Kraft ist, so dass in dem ersten Zustand des Erfassungskolbens (103) dessen Rippe (192) von der Schulter (196) des Körpers (102) entfernt liegt und dessen Nut (193) mit dem Endkopf (115) des Speicherglieds (112) ausgerichtet ist und senkrecht in dessen Bereich liegt.

15. System nach den Ansprüchen 12 und 13, **dadurch gekennzeichnet, dass** der Erfassungskolben (103) auf der Seite eines freien Endes (197) der zweiten Kraft unterliegt und auf der dem freien Ende (197) entgegengesetzten Seite der ersten Kraft unterliegt; und die Erfassungs- und Speichervorrichtung (100) dabei so ausgelegt ist, dass die erste Kraft größer ist als die zweite Kraft.

16. System nach einem der Ansprüche 2 und 3, **dadurch gekennzeichnet, dass** die Erfassungs- und Speichervorrichtung (100) ein erstes Steuerglied (160) enthält, das dazu ausgelegt ist, die erste repräsentative Information zu empfangen, sowie ein zweites Steuerglied (150), das dazu ausgelegt ist, die zweite repräsentative Information zu empfangen.

17. System nach Anspruch 16, **dadurch gekennzeichnet, dass** die Erfassungs- und Speichervorrichtung (100) ferner zwei bedingungsabhängige Leitorgane (170) enthält, die jeweils mit einem Schalter (178) und einem Rückstellglied (172) versehen sind, das mit dem jeweiligen Schalter (178) zusammenwirkt, und jeweils ein Versorgungssignal (171) empfangen, wobei ein erstes der beiden bedingungsabhängigen Leitorgane (170) über einen ersten Leitungsabschnitt (176) mit einer die Feststellbremsdruckkammer (25) versorgenden Leitung verbunden ist und über einen zweiten Leitungsabschnitt (177) zugleich mit dem ersten Steuerglied (160) und mit dem zweiten Steuerglied (150) verbunden ist, und ein zweites der beiden bedingungsabhängigen Leitorgane (170) über einen dritten Leitungsabschnitt (173) mit einer die Betriebsbremsdruckkammer (13) versorgenden Leitung verbunden ist und über einen vierten Leitungsabschnitt (174) auch mit dem zweiten Steuerglied (150) verbunden ist.

18. System nach Anspruch 17, **dadurch gekennzeichnet, dass** das Betätigungsglied (67) dazu ausgelegt ist, über eine zugeordnete erste Steuerdrahtleitung (46) eine Anweisung zum Betätigen der Feststellbreme (CFP1) zu empfangen; während das Betätigungsglied (57) dazu ausgelegt ist, über eine zugeordnete zweite Steuerdrahtleitung (47) eine Anweisung zum Betätigen der Feststellbreme (CFP2) zu empfangen; wobei das erste Steuerglied (160) dazu ausgelegt ist, gegebenenfalls eine Kontrollleuchte (120) über eine Stromquelle (189) elektrisch zu versorgen, und das zweite Steuerglied (150) an der ersten Steuerdrahtleitung (46) zwischengeschaltet und dazu ausgelegt, einerseits gegebenenfalls die Anweisung zum Betätigen der Feststellbremse (CFP1) an das Betätigungsglied (67) zu leiten und andererseits gegebenenfalls eine Kontrollleuchte (119) über eine Stromquelle elektrisch (185) elektrisch zu versorgen.

19. System nach einem der Ansprüche 17 und 18, **dadurch gekennzeichnet, dass** das erste Steuerglied (160) eine erste elektrische Spule (186), die mit dem zweiten Leitungsabschnitt (177) verbunden ist, einen ersten Schalter (188), der dazu ausgelegt ist, über die erste elektrische Spule (186), wenn diese versorgt wird, in eine Arbeitsposition betätigt zu werden, und eine Rückstellfeder (187) enthält, die dazu ausgelegt ist, den Schalter (188) in eine Ruheposition zurückzustellen, wenn die erste elektrische Spule (186) nicht versorgt wird; und das zweite Steuerglied (150) eine zweite elektrische Spule (180), die mit dem vierten Leitungsabschnitt (174) verbunden ist, eine dritte elektrische Spule (181), die mit dem zweiten Leitungsabschnitt (177) verbunden ist, sowie einen zweiten Schalter (182) und einen dritten Schalter (183) enthält, der über eine Schnittstelle (184) mechanisch mit dem zweiten Schalter (182) verbunden ist; wobei der zweite und der dritte Schalter (182, 183) dazu ausgelegt sind, über die zweite elektrische Spule (180) zusammen in eine Arbeitsposition betätigt zu werden, wenn diese Spule versorgt wird und die dritte elektrische Spule (181) nicht versorgt wird, und über die dritte elektrische Spule (181) in eine Ruheposition betätigt zu werden, wenn diese Spule versorgt wird und die zweite elektrische Spule (180) nicht versorgt wird.

20. System nach Anspruch 19, **dadurch gekennzeichnet, dass** die erste Verteilervorrichtung (51) so gesteuert wird, dass die Feststellbremsdruckkammer (25) entleert werden kann, wobei der Schalter (178) des ersten der beiden bedingungsabhängigen Leitorgane (170) keinen elektrischen Pfad zwischen der Versorgung (171) und dem zweiten Leitungsabschnitt (177) erstellt und die erste und die dritte elektrische Spule (186, 181) nicht versorgt, der erste Schalter (188) des ersten Steuerglieds (160) nicht über die erste Spule (186) beaufschlagt wird und keinen elektrischen Pfad zwischen der Versorgung (189) und der ausgeschalteten Kontrollleuchte (120) erstellt, wobei die zweite Verteilervorrichtung (61) gestattet, die Betriebsbremsdruckkammer (13) mit dem dritten pneumatischen Druckmittel zu versorgen, der Schalter (178) des zweiten der beiden bedingungsabhängigen Leitorgane (170) einen elektrischen Pfad zwischen der Versorgung (171) und dem vierten Leitungsabschnitt (174) erstellt und die zweite elektrische Spule (180) versorgt, der zweite und der dritte Schalter (182, 183) über die zweite Spule (180) in ihre Arbeitsposition beaufschlagt werden, wodurch ein elektrischer Pfad zwischen der Versorgung (185) und der Kontrollleuchte (119) erstellt wird, die eingeschaltet wird; so dass angezeigt wird, dass die Feststellbremse (7) betätigt ist.

21. System nach einem der Ansprüche 19 und 20, **dadurch gekennzeichnet, dass** die erste Verteilervorrichtung (51) so gesteuert wird, dass die Feststellbremsdruckkammer (25) versorgt werden kann, wobei der Schalter (178) des ersten der beiden bedingungsabhängigen Leitorgane (170) einen elektrischen Pfad zwischen der Versorgung (171) und dem zweiten Leitungsabschnitt (177) erstellt und die erste und die dritte elektrische Spule (186, 181) versorgt, der erste Schalter (188) über die erste Spule (186) beaufschlagt wird und einen elektrischen Pfad zwischen der Versorgung (189) und der Kontrollleuchte (120) erstellt, die eingeschaltet wird, der Schalter (178) des zweiten der beiden bedingungsabhängigen Leitorgane (170) keinen elektrischen Pfad zwischen der Versorgung (171) und dem vierten Leitungsabschnitt (174) erstellt und die zweite elektrische Spule (180) somit nicht versorgt, der zweite und der dritte Schalter (182, 183) über die dritte Spule (181) in ihre Ruheposition beaufschlagt werden, wodurch der elektrische Pfad zwischen der Versorgung (185) und der Kontrollleuchte (119) unterbrochen wird, die ausgeschaltet wird, und das Feststellbremssignal (CFP1) bis zum Betätigungsglied (67) der zweiten Verteilervorrichtung (61) geleitet werden kann.

22. Verfahren zum Bremsen eines Schienenfahrzeugs mit einem Schienenbremssystem (1) nach einem der Ansprüche 1 bis 21, umfassend:
- den Schritt des Empfangens einer Information, die repräsentativ ist für die Position des Sperrzapfens (20);
- den Schritt des Empfangens einer Information, die repräsentativ ist für die Versorgung der Betriebsbremsdruckkammer (13) mit einem weiteren pneumatischen Druckmittel;
- den Schritt des Ableitens einer Information von den empfangenen repräsentativen Informationen, die repräsentativ ist für die Betätigung der Feststellbremse (7); und
- den Schritt des Speicherns der abgeleiteten, repräsentativen Information.

23. Verfahren nach Anspruch 22, **dadurch gekennzeichnet, dass** es vorhergehend, gleichzeitig oder aufeinanderfolgend in beliebiger Reihenfolge die Schritte des Steuerns der Verlagerung des Sperrzapfens (20) in seine zweite Position, so dass die Feststellbremse (7) in ihre Arbeitsstellung gebracht wird, und des Steuerns der Versorgung der Betriebsbremsdruckkammer (13) mit dem weiteren pneumatischen Druckmittel, so dass eine vorbestimmte Bremskraft aufgebracht wird, umfasst.

## Claims

1. A rail vehicle braking system having brakes with at least one lining or at least one block (5), comprising a body (2), a braking linkage (4) configured to act on at least one said brake (5), a service brake (6) comprising a braking piston (8) movable relative to said body (2) to act on said braking linkage (4) and delimiting with said body (2) a service brake pressure chamber (13) configured to be supplied by a first pneumatic pressure agent to place said braking piston (8) in a service braking position, as well as a parking brake (7) configured to act on said braking piston (8) of said service brake (6) and having a working configuration and a resting configuration;
said parking brake (7) comprising a blocking device (20) movable relative to said body (2) to act on said braking piston (8) and having a first position and a second position in which said blocking device (20) is configured to immobilize said braking piston (8) in service braking position, said parking brake (7) then being in working configuration, and a control device (23, 24) movable relative to said body (2) and having a locking position in which said control device (23, 24) is configured to hold said blocking device (20) in its second position;
said rail vehicle braking system (1) being configured to supply the service brake pressure chamber (13) with another pneumatic pressure agent of which the pressure is determined, so as to apply a determined braking force when said parking brake (7) is in working configuration; and
said rail vehicle braking system (1) further comprising a detection and memorization device (100) configured to receive a first information item representing the position of the blocking device (20), receive a second information item representing the supply of the service brake pressure chamber (13) by the other pneumatic pressure agent, deduce from said first and second information items representing an information item representing the application of the parking brake, and memorize said deduced representing information item; whereby said information item representing the application of the parking brake is kept even if the service brake pressure chamber (13) is no longer supplied by the other pneumatic pressure agent.

2. A system according to claim 1, **characterized in that** said control device (23, 24) delimits with said body (2) a parking brake pressure chamber (25) configured to be supplied by a second pneumatic pressure agent, and having a locking position in which said control device (23, 24) is configured to keep said blocking device (20) in its second position; and said first representing information item is a pressure value of said second pneumatic pressure agent taken in a parking brake pipe (71) supplying said parking brake pressure chamber (25).

3. A system according to claim 2, **characterized in that** said rail vehicle braking system (1) comprises a dedicated first pneumatic distribution device (51) connected to a source of supply of pneumatic pressure agents (73) and connected to said parking brake pressure chamber (25) in order to supply it with said second pneumatic pressure agent or vent it to place said parking brake (7) respectively in its resting and working configurations, as well as a dedicated second pneumatic distribution device (61) connected to said source of supply of pneumatic pressure agents (73) and connected to said service brake pressure chamber (13) in order to supply it with the other, referred to as third, pneumatic pressure agent of which the pressure value is determined, so as to apply a determined braking force when said parking brake (7) is in working configuration; said first and dedicated second pneumatic distribution devices (51, 61) being configured to be controlled by at least one control signal (CFP, CFP1, CFP2).

4. A system according to one of claims 2 and 3, **characterized in that** said detection and memorization device (100) comprises a body (102), a detection piston (103) movably mounted in the body (102) and defining with that latter a first detection chamber (104) and a second detection chamber (106) distinct from the first detection chamber, an elastic return member (105) disposed in the second detection chamber (106) and configured to act on the detection piston (103), what is referred to as a memory member (112) moveably mounted also in the body (102), defining with the latter a locking chamber (114) in fluidic communication with the second detection chamber (106), and being configured to act on the detection piston (103) via a return spring (113), so as to keep that detection piston (103) in a predetermined position.

5. A system according to claim 4, **characterized in that** the body (102) comprises a first detection aperture (108) opening into the first detection chamber (104) and communicating with a first detection pipe (107) connected to a pipe supplying the service brake pressure chamber (13); the first detection chamber (104) being configured to be supplied, via the first detection pipe (107), by the other, referred to as third, pneumatic pressure agent when it supplies the service brake pressure chamber (13) and to be vented when it does not supply the service brake pressure chamber (13).

6. A system according to one of claims 4 and 5, **characterized in that** the body (102) further comprises a second detection aperture (111) opening into the second detection chamber (106) and communicating with a second detection pipe (110) connected to a pipe supplying the parking brake pressure chamber (25); the second detection chamber (106) being configured to be supplied, via the second detection pipe (110), by second pneumatic pressure agent when it supplies the parking brake pressure chamber (25) and to be vented when it does not supply the parking brake pressure chamber (25).

7. A system according to any one of claims 4 to 6, **characterized in that** said detection and memorization device (100) further comprises an indication unit (116) with several indicator lights (119, 120) and having a supply signal (117), a switch (118) and a return spring (121) cooperating with the switch (118); and said detection and memorization device (100) is configured such that the movement of the memory member (112) in the body (102) makes it possible to act on the switch (118) against the return spring (121) to supply one of the indicator lights.

8. A system according to any one of claims 4 to 7, **characterized in that** said detection and memorization device (100) is configured such that, when the parking brake pressure chamber (25) is vented, the second detection chamber (106) and the locking chamber (114) are not supplied, the detection piston (103) is acted upon by the elastic return member (105), the memory member (112) is acted upon by the return spring (113), as regards the first detection chamber (104), this is supplied by the other, so-called third, pneumatic pressure agent and acts upon the detection piston (103) against the return member (105); so as to place the detection piston (103) in a first state in which the memory member (112) comes to hold it in position.

9. A system according to any one of claims 4 to 8, **characterized in that** said detection and memorization device (100) is configured such that, when the parking brake pressure chamber (25) is supplied, the second detection chamber (106) and the locking chamber (114) are supplied, the detection piston (103) is acted upon by the elastic return member (105) and also by the second pneumatic pressure agent, the memory member (112) is moved against the return spring (113), as regards the first detection chamber (104), this is not supplied by the third pneumatic pressure agent; such that the detection piston (103) is therefore in a second state in which the memory member (112) does not act on the latter.

10. A system according to any one of claims 4 to 9, **characterized in that** the detection piston (103) has a groove (193) formed on the periphery of the detection piston (103), located towards the second detection chamber (106), and the memory member (112) is housed in a cavity (190) of the body (102) and is provided with an end head (115) configured to come into engagement in the groove (193) provided on the detection piston (103) when the latter is in a first state in which the memory member (112) comes to keep it in position.

11. A system according to any one of claims 4 to 10, **characterized in that** the detection piston (103) furthermore has a rib (192) formed on the periphery of the detection piston (103), located towards the second detection chamber (106), and the body (102) is provided with a shoulder (196) against which said rib (192) is configured to come into engagement, when the detection piston (103) is in a second state in which the memory member (112) does not act on the latter.

12. A system according to one of claims 10 and 11, **characterized in that** the detection piston (103) is brought into its second state by a first force equal to the sum of the loads applied by the second pressure agent and by the return member (105); i.e. respectively approximately the parking brake pressure value multiplied by the surface area of the detection piston (103) on which acts that parking brake pressure, added to the load applied by the return member (105).

13. A system according to any one of claims 10 to 12, **characterized in that** the detection piston (103) is brought into its first state by a second force equal here to approximately the pressure value of the other, referred to as third, pneumatic pressure agent, multiplied by the surface area of the detection piston (103) on which that other agent acts, at the location of a free end (197) of the detection piston (103).

14. A system according to claims 12 and 13, **characterized in that** the second force is greater than the load applied by the return member (105) such that, in the first state of the detection piston (103), its rib (192) is at a distance from the shoulder (196) of the body (102) and its groove (193) is aligned with and facing the end head (115) of the memory member (112).

15. A system according to claims 12 and 13, **characterized in that** the detection piston (103) is subjected, at a free end (197), to the second force and remotely opposite to its free end, to the first force; and the detection and memorization device is configured here such that the first force is greater than the second force.

16. A system according to one of claims 2 and 3, **characterized in that** said detection and memorization device (100) comprises a first controller (160) configured to receive said first representing information item and a second controller (150) configured to receive said second representing information item.

17. A system according to claim 16, **characterized in that** said detection and memorization device (100) further comprises two conditional management members (170) each provided with a switch (178), with a return member (172) cooperating with the respective switch (178) and each receiving a supply signal (171),a first of the two conditional management members (170) being connected by a first section of pipe (176) to a pipe supplying the parking brake pressure chamber (25), and is also connected by a second section of pipe (177) to both the first controller (160) and to the second controller (150), and a second of the two conditional management members (170) is connected by a third section of pipe (173) to a pipe supplying the service brake pressure chamber (13) and is also connected by a fourth section of pipe (174) to the second controller (150).

18. A system according to claim 17, **characterized in that** said actuator (67) is configured to receive a setting for parking brake application (CFP1) by a dedicated first control line (46); whereas the actuator (57) is configured to receive a parking brake application setting (CFP2) by a dedicated second control line (47); the first controller (160) is configured to electrically supply or not supply an indicator light (120) by virtue of an electricity supply source (189), and the second controller (150) is interposed on the first control line (46), configured to cause the parking brake application setting (CFP1) to be conveyed or not conveyed to the actuator (67), and configured to electrically supply or not supply an indicator light (119) by virtue of an electricity supply source (185).

19. A system according to one of claims 17 and 18, **characterized in that** the first controller (160) comprises a first electric coil (186) connected to the second section of pipe (177), a first switch (188) configured to be actuated to a working position by the first electric coil (186) when it is powered, and a return spring (187) configured to return the switch (188) to a resting position when the first electric coil (186) is not powered; and the second controller (150) comprising a second electric coil (180) connected to the fourth section of pipe (174), a third electric coil (181) connected to the second section of pipe (177), as well as a second switch (182) and a third switch (183) mechanically connected to the second switch (182) by an interface (184); the second and third switches (182, 183) being configured to be actuated together to a working position by the second electric coil (180) when it is powered and the third electric coil (181) is not powered, and to a resting position by the third electric coil (181) when it is powered and the second electric coil (180) is not powered.

20. A system according to claim 19, **characterized in that** , the first distribution device (51) is controlled to enable the parking brake pressure chamber (25), to be vented, the switch (178) of the first of the two conditional management members (170) does not establish an electrical path between the supply (171) and the second section of pipe (177) and does not supply the first and third electric coils (186, 181), the first switch (188) of the first controller (160) is not acted upon by the first coil (186) and does not establish an electrical path between the supply (189) and the indicator light (120) which is off, the second distribution device (61) enables the service brake pressure chamber (13) to be supplied with the third pneumatic pressure agent, the switch (178) of the second of the two conditional management members (170) establishes an electrical path between the supply (171) and the fourth section of pipe (174) and supplies the second electric coil (180), the second and third switches (182, 183) are actuated into their working position by the second coil (180), thus establishing an electrical path between the supply (185) and the indicator light (119) which is on; so as to indicate that the parking brake (7) is applied.

21. A system according to one of claims 19 and 20, **characterized in that** the first distribution device (51) is controlled to enable the parking brake pressure chamber (25), to be supplied, the switch (178) of the first of the two conditional management members (170) establishes an electrical path between the supply (171) and the second section of pipe (177) and supplies the first and third electric coils (186, 181), the first switch (188) is acted upon by the first coil (186) and establishes an electrical path between the supply (189) and the indicator light (120) which is on, the switch (178) of the second of the two conditional management members (170) does not establish an electrical path between the supply (171) and the fourth section of pipe (174) and thus does not supply the second electric coil (180), the second and third switches (182, 183) are actuated into their resting position by the third coil (181), cutting the electrical path between the supply (185) and the indicator light (119) which is off and authorizing the parking brake signal (CFP1) to pass to the actuator (67) of the second distribution device (61).

22. A method of braking a rail vehicle comprising a rail vehicle braking system (1) according to any one of claims 1 to 21, comprising:
- the step of receiving an information item representing the position of the blocking finger (20);
- the step of receiving an information item representing the supply by another pneumatic pressure agent of the service brake pressure chamber (13);
- the step of deducing said received representing information items, an information item representing the application of the parking brake (7) ; and
- the step of memorizing said deduced representing information item.

23. A method according to claim 22, **characterized in that** it comprises in advance, simultaneously or successively whatever the order is, the steps of controlling the movement of the blocking finger (20) into its second position so as to place the parking brake (7) in its working configuration and to control the supply of the service brake pressure chamber (13) with the other pneumatic pressure agent so as to apply a determined braking force.
